# EUROPÄISCHE PATENTSCHRIFT

(11) **EP 1 401 902 B1**
(45) Veröffentlichungstag und Bekanntmachung des Hinweises auf die Patenterteilung: **10.10.2007**
(21) Anmeldenummer: 02747388.3
(22) Anmeldetag: 14.06.2002
(51) Int. Cl.: C08F 292/00

(54) **VERFAHREN ZUR HERSTELLUNG EINER WÄSSRIGEN DISPERSION VON AUS POLYMERISAT UND FEINTEILIGEM ANORGANISCHEM FESTSTOFF AUFGEBAUTEN PARTIKELN**
METHOD FOR PRODUCING AN AQUEOUS DISPERSION OF PARTICLES COMPOSED OF A POLYMER AND A FINE-PARTICLE INORGANIC SOLID
PROCEDE DE FABRICATION D'UNE DISPERSION AQUEUSE DE PARTICULES COMPOSEE DE POLYMERISAT ET DE SOLIDES ANORGANIQUES FINS

(30) Priorität: 21.06.2001 DE 10129537
(43) Veröffentlichungstag der Anmeldung: 31.03.2004
(73) Patentinhaber: BASF Aktiengesellschaft, 67056 Ludwigshafen (DE)
(72) Erfinder: XUE, Zhijian, 67063 Ludwigshafen (DE); WIESE, Harm, 69121 Heidelberg (DE)
(86) Internationale Anmeldenummer: PCT/EP2002/006545
(87) Internationale Veröffentlichungsnummer: WO 2003/000760

(56) Entgegenhaltungen:
- WO-A-01/18081
- WO-A-01/29106
- MASCIA L: "Developments in Organic-Inorganic Polymeric Hybrids: Ceramers" TRENDS IN POLYMER SCIENCE, ELSEVIER SCIENCE PUBLISHERS B.V. AMSTERDAM, NL, Bd. 3, Nr. 2, Februar 1995 (1995-02), Seiten 61-66, XP004207679 ISSN: 0966-4793

## Beschreibung

Die vorliegende Erfindung betrifft ein Verfahren zur Herstellung einer wässrigen Dispersion von aus Polymerisat und feinteiligem anorganischem Feststoff aufgebauten Partikeln (Kompositpartikel), bei dem ein Gemisch aus ethylenisch ungesättigten Monomeren in wässrigem Medium dispers verteilt und mittels wenigstens eines radikalischen Polymerisationsinitiators im Beisein wenigstens eines dispers verteilten, feinteiligen anorganischen Feststoffes und wenigstens eines anionischen, kationischen und nichtionischen Dispergiermittels nach der Methode der radikalisch wässrigen Emulsionspolymerisation polymerisiert wird. Ferner betrifft die vorliegende Erfindung die Verwendung der wässrigen Kompositpartikeldispersion sowie der daraus zugänglichen Kompositpartikelpulver.

Wässrige Dispersionen von Kompositpartikeln sind allgemein bekannt. Es handelt sich um fluide Systeme, die als disperse Phase in wässrigem Dispergiermedium aus mehreren ineinander verschlungenen Polymerisatketten bestehenden Polymerisatknäuel, die sogenannte Polymermatrix, und feinteiligem anorganischem Feststoff aufgebaute Partikel in disperser Verteilung befindlich enthalten. Der Durchmesser der Kompositpartikel liegt häufig im Bereich von 30 nm bis 5000 nm.

Ebenso wie Polymerisatlösungen beim Verdampfen des Lösungsmittels und wässrige Polymerisatdispersionen beim Verdampfen des wässrigen Dispergiermediums, weisen wässrige Dispersionen von Kompositpartikeln das Potential zur Ausbildung von modifizierten, feinteiligen anorganischen Feststoff enthaltenden Polymerisatfilmen auf, weshalb sie insbesondere als modifizierte Bindemittel, z.B. für Anstrichfarben oder für Massen zum Beschichten von Leder, Papier oder Kunststofffolien von Interesse sind. Die aus wässrigen Dispersionen von Kompositpartikeln prinzipiell zugänglichen Kompositpartikelpulver sind darüber hinaus auch als Additive für Kunststoffe, Komponenten für Tonerformulierungen oder Zusatzstoffe in elektrophotographischen Anwendungen von Interesse.

Bei der Herstellung wässriger Dispersionen von Kompositpartikeln ist von folgendem Stand der Technik auszugehen.

Ein Verfahren zur Herstellung von mit Polymeren umhüllten anorganischen Partikeln mittels wässriger Emulsionspolymerisation wird in der US-A 3,544,500 offenbart. Bei diesem Verfahren werden die anorganischen Partikel vor der eigentlichen wässrigen Emulsionspolymerisation mit wasserunlöslichen Polymeren beschichtet. Die Dispergierung der so in einem aufwendigen Prozeß behandelten anorganischen Partikel in wässrigem Medium erfolgt mittels spezieller Stabilisatoren.

Die EP-A 104 498 betrifft ein Verfahren zur Herstellung von polymerumhüllten Feststoffen. Kennzeichnend für das Verfahren ist, dass feinteilige Feststoffe, welche eine minimale Oberflächenladung aufweisen, mittels eines nichtionischen Schutzkolloids in wässrigem Polymersiationsmedium dispergiert und die zugesetzten ethylenisch ungesättigten Monomere mittels nichtionischer Polymerisationsinitiatoren polymerisiert werden.

Die US-A 4,421,660 offenbart ein Verfahren zur Herstellung von wässrigen Dispersionen, deren dispers vorliegenden Partikel anorganische Teilchen, welche vollständig von einer Polymerschale umgeben sind, aufweisen. Die Herstellung der wässrigen Dispersionen erfolgt durch radikalisch initiierte wässrige Emulsionspolymerisation hydrophober ethylenisch ungesättigter Monomerer in Anwesenheit dispers verteilter anorganischer Teilchen.

Ein Verfahren zur Polymerisation von ethylenisch ungesättigten Monomeren in Anwesenheit von ladungsfreien anorganischen Feststoffpartikeln, welche mit nichtionischen Dispergiermitteln im wässrigen Reaktionsmedium stabilisiert sind, wird in der US-A 4,608,401 offenbart.

Die radikalisch initiierte wässrige Emulsionspolymerisation von Styrol in Anwesenheit von modifizierten Siliziumdioxidteilchen wird von Furusawa et al. im Journal of Colloid and Interface Science 1986, 109, Seiten 69 bis 76 beschrieben. Die Modifikation der kugelförmigen Siliziumdioxidteilchen mit einem mittleren Teilchendurchmesser von 190 nm erfolgt mittels Hydroxypropylcellulose.

Hergeth et al. (siehe Polymer, 1989, 30, Seiten 254 bis 258) beschreiben die radikalisch initiierte wässrige Emulsionspolymerisation von Methylmethacrylat bzw. Vinylacetat in Anwesenheit von aggregiertem feinteiligem Quarzpulver. Die Teilchengrößen des eingesetzten aggregierten Quarzpulvers liegen zwischen 1 µm und 35 µm.

Die GB-A 2 227 739 betrifft ein spezielles Emulsionspolymerisationsverfahren, bei dem ethylenisch ungesättigte Monomere in Anwesenheit dispergierter anorganischer Pulver, welche kationische Ladungen aufweisen, unter Anwendung von Ultraschallwellen polymerisiert werden. Die kationische Ladungen der dispergierten Feststoffteilchen werden durch Behandlung der Teilchen mit kationischen Agenzien erzeugt, wobei Aluminiumsalze bevorzugt sind. Die Schrift enthält jedoch keine Angaben bezüglich Teilchengrößen und Stabilität der wässrigen Feststoffdispersionen.

In der EP-A 505 230 wird die radikalisch wässrige Emulsionspolymerisation von ethylenisch ungesättigten Monomeren in Anwesenheit von oberflächenmodifizierten Siliziumdioxidpartikeln offenbart. Deren Funktionalisierung erfolgt mittels spezieller silanolgruppenhaltiger Acrylsäureester.

Die US-A 4,981,882 betrifft die Herstellung von Kompositpartikeln mittels eines speziellen Emulsionspolymerisationsverfahrens. Verfahrenswesentlich sind feinteilige anorganische Teilchen, welche mittels basischer Dispergiermittel im wässrigen Medium dispergiert sind, das Behandeln dieser anorganischen Partikel mit ethylenisch ungesättigten Carbonsäuren und das Zugeben wenigstens einer amphiphilen Komponente zur Stabilisierung der Feststoffdispersion während der Emulsionspolymersiation. Die feinteiligen anorganischen Partikel weisen bevorzugt eine Teilchengröße zwischen 100 und 700 nm auf.

Haga et al. (siehe Die Angewandte Makromolekulare Chemie 1991, 189, Seiten 23 bis 34) beschreiben den Einfluß von Art und Konzentration der Monomeren, Art und Konzentration des Polymerisationsinitiators sowie den Einfluß des pH-Wertes auf die Polymerenbildung an in wässrigem Medium dispergierten Titandioxidteilchen. Hohe Ausbeuten bei der Verkapselung der Titandioxidteilchen werden erhalten, wenn die Polymerketten und die Titandioxidteilchen entgegengesetzte Ladungen aufweisen. Die Publikation enthält jedoch keine Angaben bezüglich der Teilchengröße und der Stabilität der Titandioxiddispersionen.

Long et al. beschreiben in Tianjin Daxue Xuebao 1991, 4, Seiten 10 bis 15 die dispergiermittelfreie Polymerisation von Methylmethacrylat in Anwesentheit von feinteiligen Siliziumdioxid- bzw. Aluminiumoxidteilchen. Gute Ausbeuten bei der Verkapselung der anorganischen Teilchen werden erhalten, wenn die Endgruppen der Polymerketten und die anorganischen Teilchen entgegengesetzte Ladungen aufweisen.

Die EP-A 572 128 betrifft ein Herstellverfahren von Kompositpartikeln, bei dem die anorganischen Teilchen in wässrigem Medium bei einem bestimmten pH-Wert mit einer organischen Polysäure oder deren Salz behandelt werden und die daran anschließend durchgeführte radikalisch initiierte wässrige Emulsionspolymerisation von ethylenisch ungesättigten Monomeren bei einem pH-Wert < 9 erfolgt.

Bourgeat-Lami et al. (siehe Die Angewandte Makromolekulare Chemie 1996, 242, Seiten 105 bis 122) beschreiben die durch radikalisch wässrige Emulsionspolymerisation von Ethylacrylat in Gegenwart funktionalisierter und nicht funktionalisierter Siliziumdioxidteilchen zugänglichen Reaktionsprodukte. In den Polymerisationsexperimenten wurden generell anionisch geladene Siliziumdioxidteilchen, das nichtionische Nonylphenolethoxylat NP30 und das anionische Natriumdodecylsulfat (SDS) als Emulgatoren und Kaliumperoxodisulfat als radikalischer Polymerisationsinitiator verwendet. Die Autoren beschreiben die angefallenen Reaktionsprodukte als Aggregate, die mehr als ein Siliziumdioxidteilchen enthalten oder als Polymercluster, die sich auf der Siliziumdioxidoberfläche bilden.

Paulke et al. (siehe Synthesis Studies of Paramagnetic Polystyrene Latex Particles in Scientific and Clinical Applications of Magnetic Carriers, Seiten 69 bis 76, Plenum Press, New York, 1997) beschreiben drei prinzipielle Syntheserouten zur Herstellung von wässrigen eisenoxidhaltigen Polymerdispersionen. Aufgrund unzureichender Stabilität der wässrigen Feststoffdispersion ist für alle Syntheserouten die Verwendung von frisch gefälltem Eisen-(II/III)-oxid-Hydrat unabdingbare Voraussetzung. In Anwesenheit dieses frisch gefällten Eisen(II/III)-oxid-Hydrats erfolgt in der ersten Syntheseroute die radikalisch initiierte wässrige Emulsionspolymerisation von Styrol mit SDS als Emulgator und Kaliumperoxodisulfat als Polymerisationsinitiator. In der von den Autoren favorisierten zweiten Syntheseroute wird Styrol und Methacrylsäure in Anwesenheit des frisch gefällten Eisen(II/III)-oxid-Hydrats, des Emulgators N-Cetyl-N,N,N-trimethylammoniumbromid (CTAB) und spezieller oberflächenaktiver Polymerisationsinitiatoren (PEGA 600) in methanolisch/wässrigem Medium polymerisiert. In der dritten Syntheseroute werden Ethanol und Methoxyethanol als Polymerisationsmedium, Hydroxypropylcellulose als Emulgator, Benzoylperoxid als Polymerisationsinitiator und eine spezielle Eisen-(II/III)-oxid/Styrol-Mischung zur Herstellung von eisenoxidhaltigen Polymerdispersionen verwendet.

Armes et al. (siehe Advanced Materials 1999, 11, Nr. 5, Seiten 408 bis 410) beschreiben die Herstellung von Siliziumdioxid-Kompositpartikeln, welche in einer emulgatorfreien, radikalisch initiierten wässrigen Emulsionspolymerisation bei einem pH-Wert von 10 mit speziellen olefinisch ungesättigten Monomeren in Anwesenheit von dispergierten Siliziumdioxidteilchen zugänglich sind. Als Voraussetzung zur Ausbildung von siliziumdioxidenthaltenden Polymerisatpartikeln wird eine starke Säure/Base-Wechselwirkung zwischen dem gebildeten Polymeren und den verwendeten sauren Siliziumdioxidteilchen postuliert. Siliziumdioxidenthaltende Polymerisatpartikel wurden mit Poly-4-vinylpyridin und Copolymeren von Styrol bzw. Methylmethacrylat mit 4-Vinylpyridin erhalten. Als geringst möglicher Gehalt von 4-Vinylpyridin in Methylmethacrylat- bzw. Styrol-Monomerenmischungen, welche zur Ausbildung von siliziumdioxidenthaltenden Kompositpartikeln befähigt sind, wurden 4 bis 10 mol-% genannt.

In der nicht vorveröffentlichten deutschen Patentanmeldung mit dem Aktenzeichen 19942777.1 wird ein Verfahren zur Herstellung von wässrigen Kompositpartikeldispersionen beschrieben, bei dem die dispergierten anorganischen Feststoffteilchen und die bei der radikalisch initiierten wässrigen Emulsionspolymerisation eingesetzten radikalerzeugenden und/oder dispergierend wirkenden Komponenten entgegengesetzte Ladungen aufweisen.

In der ebenfalls nicht vorveröffentlichten deutschen Patentanmeldung mit dem Aktenzeichen 10000281.1 wird vom selben Anmelder ein Verfahren zur Herstellung von wässrigen Kompositpartikeldispersionen beschrieben, bei dem die dispergierten anorganischen Feststoffteilchen eine von Null verschiedene elektrophoretische Mobilität aufweisen und bei dem bei der wässrigen Emulsionspolymerisation spezielle Comonomere eingesetzt werden.

Aufgabe der vorliegenden Erfindung war es, angesichts des vorstehenden Standes der Technik ein weiteres Verfahren zur Herstellung einer wässrigen Dispersion von Kompositpartikeln nach der Methode der radikalisch initiierten wässrigen Emulsionspolymerisation in Anwesenheit eines feinteiligen anorganischen Feststoffes zur Verfügung zu stellen, welches breit anwendbar ist und Kompositpartikel mit einem ausgewogenen Profil guter Anwendungseigenschaften liefert.

Demgemäß wird ein Verfahren zur Herstellung einer wässrigen Dispersion von aus Polymerisat und feinteiligem anorganischem Feststoff aufgebauten Partikeln (Kompositpartikel) gefunden, bei dem wenigstens ein ethylenisch ungesättigtes Monomer in wässrigem Medium dispers verteilt und mittels wenigstens eines radikalischen Polymerisationsinitiators im Beisein wenigstens eines dispers verteilten, feinteiligen anorganischen Feststoffes und wenigstens eines anionischen, kationischen und nichtionischen Dispergiermittels nach der Methode der radikalisch wässrigen Emulsionspolymerisation polymerisiert wird, wobei
a) eine stabile wässrige Dispersion des wenigstens einen anorganischen Feststoffs eingesetzt wird, welche dadurch charakterisiert ist, dass sie bei einer Anfangsfeststoffkonzentration von ≥ 1 Gew.-%, bezogen auf die wässrige Dispersion des wenigstens einen anorganischen Feststoffs, noch eine Stunde nach ihrer Herstellung mehr als 90 Gew.-% des ursprünglich dispergierten Feststoffes in dispergierter Form enthält und deren dispergierte Feststoffteilchen einen Durchmesser ≤ 100 nm aufweisen,
b) die dispergierten Feststoffteilchen des wenigstens einen anorganischen Feststoffs in einer wässrigen Standardkaliumchlorid-Lösung bei einem pH-Wert, der dem pH-Wert des wässrigen Reaktionsmediums vor Beginn der Zugabe der Dispergiermittel entspricht, eine von Null verschiedene elektrophoretische Mobilität zeigen,
c) die wässrige Feststoffteilchendispersion vor Beginn der Zugabe des wenigstens einen ethylenisch ungesättigten Monomeren mit wenigstens einem anionischen, kationischen und nichtionischen Dispergiermittel versetzt wird,
d) danach 0,01 bis 30 Gew.-% der Gesamtmenge des wenigstens einen Monomeren der wässrigen Feststoffteilchendispersion zugesetzt und bis zu einem Umsatz von wenigstens 90 % polymerisiert wird
   und
e) daran anschließend die Restmenge des wenigstens einen Monomeren unter Polymerisationsbedingungen nach Maßgabe des Verbrauchs zugegeben wird.

Für das erfindungsgemäße Verfahren sind alle diejenigen feinteiligen anorganischen Feststoffe geeignet, welche stabile wässrige Dispersionen ausbilden, die bei einer Anfangsfeststoffkonzentration von ≥ 1 Gew.-%, bezogen auf die wässrige Dispersion des wenigstens einen anorganischen Feststoffs, noch eine Stunde nach ihrer Herstellung ohne Rühren oder Schütteln mehr als 90 Gew.-% des ursprünglich dispergierten Feststoffes in dispergierter Form enthalten und deren dispergierten Feststoffteilchen einen Durchmesser ≤ 100 nm aufweisen und darüber hinaus bei einem pH-Wert, der dem pH-Wert des wässrigen Reaktionsmediums vor Beginn der Zugabe der Dispergiermittel entspricht, eine von Null verschiedene elektrophoretische Mobilität zeigen.

Die quantitative Bestimmung der Anfangsfeststoffkonzentration und der Feststoffkonzentration nach einer Stunde sowie die Ermittlung der Teilchendurchmesser erfolgt über die Methode der Analytischen Ultrazentrifuge (vgl. hierzu S.E. Harding et al., Analytical Ultracentrifugation in Biochemistry and Polymer Science, Royal Society of Chemistry, Cambridge, Great Britain 1992, Chapter 10, Analysis of Polymer Dispersions with an Eight-Cell-AUC-Multiplexer: High Resolution Particle Size Distribution and Density Gradient Techniques, W. Mächtle, Seiten 147 bis 175). Die bei den Teilchendurchmesser angegebenen Werte entsprechen den sogenannten d₅₀-Werten.

Als erfindungsgemäß einsetzbare feinteilige anorganische Feststoffe sind Metalle, Metallverbindungen, wie Metalloxide und Metallsalze aber auch Halbmetall- und Nichtmetallverbindungen geeignet. Als feinteilige Metallpulver können Edelmetallkolloide, wie beispielsweise Palladium, Silber, Ruthenium, Platin, Gold und Rhodium sowie diese enthaltende Legierungen eingesetzt werden. Als feinteilige Metalloxide beispielhaft genannt seien Titandioxid (beispielsweise kommerziell verfügbar als Hombitec^{®}-Marken der Fa. Sachtleben Chemie GmbH), Zirkonium-(IV)-oxid, Zinn-(II)-oxid, Zinn-(IV)-oxid (beispielsweise kommerziell verfügbar als Nyacol^{®} SN-Marken der Fa. Akzo-Nobel), Aluminiumoxid (beispielsweise kommerziell verfügbar als Nyacol^{®} AL-Marken der Fa. Akzo-Nobel), Bariumoxid, Magnesiumoxid, verschiedene Eisenoxide, wie Eisen-(II)-oxid (Wuestit), Eisen-(III)-oxid (Hämatit) und Eisen-(II/III)-oxid (Magnetit), Chrom-(III)-oxid, Antimon-(III)-oxid, Wismut-(III)-oxid, Zinkoxid (beispielsweise kommerziell verfügbar als Sachtotec^{®}-Marken der Fa. Sachtleben Chemie GmbH), Nickel-(II)-oxid, Nickel-(III)-oxid, Cobalt-(II)-oxid, Cobalt-(III)-oxid, Kupfer-(II)-oxid, Yttrium-(III)-oxid (beispielsweise kommerziell verfügbar als Nyacol^{®} YTTRIA-Marken der Fa. Akzo-Nobel), Cer-(IV)-oxid (beispielsweise kommerziell verfügbar als Nyacol^{®} CE02-Marken der Fa. Akzo-Nobel) amorph und/oder in ihren unterschiedlichen Kristallmodifikationen sowie deren Hydroxyoxide, wie beispielsweise Hydroxytitan-(IV)-oxid, Hydroxyzirkonium-(IV)-oxid, Hydroxyaluminiumoxid (beispielsweise kommerziell verfügbar als Disperal^{®}-Marken der Fa. Condea-Chemie GmbH) und Hydroxyeisen-(III)-oxid amorph und/oder in ihren unterschiedlichen Kristallmodifikationen. Folgende amorphen und/oder in ihren unterschiedlichen Kristallstrukturen vorliegenden Metallsalze sind im erfindungsgemäßen Verfahren prinzipiell einsetzbar: Sulfide, wie Eisen-(II)-sulfid, Eisen-(III)-sulfid, Eisen-(II)-disulfid (Pyrit), Zinn-(II)-sulfid, Zinn-(IV)-sulfid, Quecksilber-(II)-sulfid, Cadmium-(II)-sulfid, Zinksulfid, Kupfer-(II)-sulfid, Silbersulfid, Nickel-(II)-sulfid, Cobalt-(II)-sulfid, Cobalt-(III)-sulfid, Mangan-(II)-sulfid, Chrom-(III)-sulfid, Titan-(II)-sulfid, Titan-(III)-sulfid, Titan-(IV)-sulfid, Zirkon-(IV)-sulfid, Antimon-(III)-sulfid, Wismut-(III)-sulfid, Hydroxide, wie Zinn-(II)-hydroxid, Aluminiumhydroxid, Magnesiumhydroxid, Calciumhydroxid, Bariumhydroxid, Zinkhydroxid, Eisen-(II)-hydroxid, Eisen-(III)-hydroxid, Sulfate, wie Calciumsulfat, Strontiumsulfat, Bariumsulfat, Blei-(IV)-sulfat, Carbonate, wie Lithiumcarbonat, Magnesiumcarbonat, Calciumcarbonat, Zinkcarbonat, Zirkonium-(IV)-carbonat, Eisen-(II)-carbonat, Eisen- (III) -carbonat, Orthophosphate, wie Lithiumorthophosphat, Calciumorthophosphat, Zinkorthophosphat, Magnesiumorthophosphat, Aluminiumorthophosphat, Zinn-(III)-orthophosphat, Eisen-(II)-orthophosphat, Eisen-(III)-orthophosphat, Metaphosphate, wie Lithiummetaphosphat, Calciummetaphosphat, Aluminiummetaphosphat, Pyrophosphate, wie Magnesiumpyrophosphat, Calciumpyrophosphat, Zinkpyrophosphat, Eisen-(III)-pyrophosphat, Zinn-(II)-pyrophosphat, Ammoniumphosphate, wie Magnesiumammoniumphosphat, Zinkammoniumphosphat, Hydroxylapatit [Ca₅{(PO₄)₃OH}], Orthosilikate, wie Lithiumorthosilikat, Calcium-/Magnesiumorthosilikat, Aluminiumorthosilikat, Eisen-(II)-orthosilikat, Eisen-(III)-orthosilikat,Magnesiumorthosilikat, Zinkorthosilikat, Zirkonium-(III)-orthosilikat, Zirkonium-(IV)-orthosilikat, Metasilikate, wie Lithiummetasilikat, Calcium-/Magnesiummetasilikat, Calciummetasilikat, Magnesiummetasilikat, Zinkmetasilikat, Schichtsilikate, wie Natriumaluminiumsilikat und Natriummagnesiumsilikat insbesondere in spontan delaminierender Form, wie beispielsweise Optigel^{®} SH (Marke der Südchemie AG), Saponit^{®} SKS-20 und Hektorit^{®} SKS 21 (Marken der Hoechst AG) sowie Laponite^{®} RD und Laponite^{®} GS (Marken der Laporte Industries Ltd.), Aluminate, wie Lithiumaluminat, Calciumaluminat, Zinkaluminat, Borate, wie Magnesiummetaborat, Magnesiumorthoborat, Oxalate, wie Calciumoxalat, Zirkonium-(IV)-oxalat, Magnesiumoxalat, Zinkoxalat, Aluminiumoxalat, Tatrate, wie Calciumtatrat, Acetylacetonate, wie Aluminiumacetylacetonat, Eisen-(III)-acetylacetonat, Salicylate, wie Aluminiumsalicylat, Citrate, wie Calciumcitrat, Eisen-(II)-citrat, Zinkcitrat, Palmitate, wie Aluminiumpalmitat, Calciumpalmitat, Magnesiumpalmitat, Stearate, wie Aluminiumstearat, Calciumstearat, Magnesiumstearat, Zinkstearat, Laurate, wie Calciumlaurat, Linoleate, wie Calciumlinoleat, Oleate, wie Calciumoleat, Eisen-(II)-oleat oder Zinkoleat.

Als wesentliche erfindungsgemäß einsetzbare Halbmetallverbindung sei amorphes und/oder in unterschiedlichen Kristallstrukturen vorliegendes Siliziumdioxid genannt. Erfindungsgemäß geeignetes Siliziumdioxid ist kommerziell verfügbar und kann beispielsweise als Aerosil^{®} (Marke der Fa. Degussa AG), Levasil^{®} (Marke der Fa. Bayer AG), Ludox^{®} (Marke der Fa. DuPont), Nyacol^{®} und Bindzil^{®} (Marken der Fa. Akzo-Nobel) und Snowtex^{®} (Marke der Fa. Nissan Chemical Industries, Ltd.) bezogen werden. Erfindungsgemäß geeignete Nichtmetallverbindungen sind beispielsweise kolloidal vorliegender Graphit oder Diamant.

Als feinteilige anorganische Feststoffe sind solche besonders geeignet, deren Löslichkeit in Wasser bei 20 °C und 1 bar (absolut) ≤ 1 g/l, bevorzugt ≤ 0,1 g/l und insbesondere ≤ 0,01 g/l ist. Besonders bevorzugt sind Verbindungen ausgewählt aus der Gruppe umfassend Siliziumdioxid, Aluminiumoxid, Zinn-(IV)-oxid, Yttrium-(III)-oxid, Cer-(IV)-oxid, Hydroxyaluminiumoxid, Calciumcarbonat, Magnesiumcarbonat, Calciumorthophosphat, Magnesiumorthophosphat, Calciummetaphospat, Magnesiummetaphosphat, Calciumpyrophosphat, Magnesiumpyrophosphat, Eisen-(II)-oxid, Eisen-(III)-oxid, Eisen-(II/III)-oxid, Titandioxid, Hydroxylapatit, Zinkoxid und Zinksulfid. Insbesondere bevorzugt sind Siliziumdioxid-Sole, welche eine elektrophoretische Mobilität mit negativem Vorzeichen aufweisen.

Vorteilhaft können auch die kommerziell verfügbaren Verbindungen der Aerosil^{®}-, Levasil^{®}-, Ludox^{®}-, Nyacol^{®}- und Bindzil^{®}-Marken (Siliziumdioxid), Disperal^{®}-Marken (Hydroxyaluminiumoxid), Nyacol^{®} AL-Marken (Aluminiumoxid), Hombitec^{®}-Marken (Titandioxid), Nyacol® SN-Marken (Zinn-(IV)-oxid), Nyacol^{®} YTTRIA-Marken (Yttrium-(III)-oxid), Nyacol^{®} CEO2-Marken (Cer-(IV)-oxid) und Sachtotec^{®}-Marken (Zinkoxid) im erfindungsgemäßen Verfahren eingesetzt werden.

Die im erfindungsgemäßen Verfahren einsetzbaren feinteiligen anorganischen Feststoffe sind so beschaffen, dass die im wässrigen Reaktionsmedium dispergierten Feststoffteilchen einen Teilchendurchmesser von ≤ 100 nm aufweisen. Erfolgreich werden solche feinteiligen anorganischen Feststoffe eingesetzt, deren dispergierte Teilchen einen Teilchendurchmesser > 0 nm aber ≤ 90 nm, ≤ 80 nm, ≤ 70 nm, ≤ 60 nm, ≤ 50 nm, ≤ 40 nm, ≤ 30 nm, ≤ 20 nm oder ≤ 10 nm und alle Werte dazwischen aufweisen. Von Vorteil werden feinteilige anorganische Feststoffe eingesetzt, welche einen Teilchendurchmesser ≤ 50 nm aufweisen. Die Ermittlung der Teilchendurchmesser erfolgt über die Methode der Analytischen Ultrazentrifuge.

Die Zugänglichkeit feinteiliger Feststoffe ist dem Fachmann prinzipiell bekannt und erfolgt beispielsweise durch Fällungsreaktionen oder chemische Reaktionen in der Gasphase (vgl. hierzu E. Matijevic, Chem. Mater. 1993, 5, Seiten 412 bis 426; Ullmann's Encyclopedia of Industrial Chemistry, Vol. A 23, Seiten 583 bis 660, Verlag Chemie, Weinheim, 1992; D.F. Evans, H. Wennerström in The Colloidal Domain, Seiten 363 bis 405, Verlag Chemie, Weinheim, 1994 und R.J. Hunter in Foundations of Colloid Science, Vol. I, Seiten 10 bis 17, Clarendon Press, Oxford, 1991).

Die Herstellung der stabilen Feststoffdispersion erfolgt häufig direkt bei der Synthese der feinteiligen anorganischen Feststoffe in wässrigem Medium oder alternativ durch Eindispergieren des feinteiligen anorganischen Feststoffs in das wässrige Medium. Abhängig vom Herstellweg der feinteiligen anorganischen Feststoffe gelingt dies entweder direkt, beispielsweise beim gefälltem oder pyrogenem Siliziumdioxid, Aluminiumoxid etc. oder unter Zuhilfenahme geeigneter Hilfsaggregate, wie beispielsweise Dispergatoren oder Ultraschallsonotroden.

Erfindungsgemäß sind jedoch nur solche feinteiligen anorganischen Feststoffe geeignet, deren wässrige Feststoffdispersion bei einer Anfangsfeststoffkonzentration von ≥ 1 Gew.-%, bezogen auf die wässrige Dispersion des feinteiligen anorganischen Feststoffs, noch eine Stunde nach ihrer Herstellung oder durch Aufrühren oder Aufschütteln der sedimentierten Feststoffe, ohne weiteres Rühren oder Schütteln mehr als 90 Gew.-% des ursprünglich dispergierten Feststoffes in dispergierter Form enthält und deren dispergierten Feststoffteilchen einen Durchmesser ≤ 100 nm aufweisen. Üblich sind Anfangsfeststoffkonzentrationen ≤ 60 Gew.-%. Vorteilhaft können jedoch auch Anfangsfeststoffkonzentrationen ≤ 55 Gew.-%, ≤ 50 Gew.-%, ≤ 45 Gew.-%, ≤ 40 Gew.-%, ≤ 35 Gew.-%, ≤ 30 Gew.-%, ≤ 25 Gew.-%, ≤ 20 Gew.-%, ≤ 15 Gew.-%, ≤ 10 Gew.-% sowie ≤ 2 Gew.-%, ≥ 3 Gew.-%, ≥ 4 Gew.-% oder ≥ 5 Gew.-% und alle Werte dazwischen, jeweils bezogen auf die wässrige Dispersion des feinteiligen anorganischen Feststoffes, eingesetzt werden. Bezogen auf 100 Gew.-Teile des wenigstens einen ethylenisch ungesättigten Monomeren werden erfindungsgemäß 1 bis 1000 Gew.-Teile, in der Regel 5 bis 300 Gew.-Teile und häufig 10 bis 200 Gew.-Teile des wenigstens einen feinteiligen anorganischen Feststoffes verwendet.

Erfindungswesentlich ist, dass die dispergierten Feststoffteilchen in einer wässrigen Standardkaliumchlorid-Lösung bei einem pH-Wert, der dem pH-Wert des wässrigen Reaktionsmediums vor Beginn der Zugabe der Dispergiermittel entspricht, eine von Null verschiedene elekrophoretische Mobilität zeigen. Die pH-Wertbestimmung erfolgt bei 20 °C und 1 bar (absolut) mit handelsüblichen pH-Meßgeräten an einer wässrigen Dispersion, welche neben dem wenigstens einen feinteiligen anorganischen Feststoff gegebenenfalls noch Säuren oder Basen zur Einstellung des pH-Wertes enthält.

Die Methode zur Bestimmung der elektrophoretischen Mobilität ist dem Fachmann bekannt (vgl. z.B. R.J. Hunter, Introduction to modern Colloid Science, Kapitel 8.4, Seiten 241 bis 248, Oxford University Press, Oxford, 1993 sowie K. Oka und K. Furusawa, in Electrical Phenomena at Interfaces, Surfactant Science Series, Vol. 76, Kapitel 8, Seiten 151 bis 232, Marcel Dekker, New York, 1998). Die elektrophoretische Mobilität der im wässrigen Reaktionsmedium dispergierten Feststoffteilchen wird mittels eines handelsüblichen Elektrophoresegeräts, wie beispielsweise dem Zetasizer 3000 der Fa. Malvern Instruments Ltd., bei 20 °C und 1 bar (absolut) bestimmt. Hierzu wird die wässrige Feststoffteilchendispersion mit einer pH-neutralen 10 millimolaren (mM) wässrigen Kaliumchlorid-Lösung (Standardkaliumchlorid-Lösung) soweit verdünnt, dass die Feststoffteilchen-Konzentration ca. 50 bis 100 mg/l beträgt. Die Einstellung der Meßprobe auf den pH-Wert, den das wässrige Reaktionsmedium vor Beginn der Zugabe der Dispergiermittel aufweist, erfolgt mittels der gängigen anorganischen Säuren, wie beispielsweise verdünnte Salzsäure oder Salpetersäure oder Basen, wie beispielsweise verdünnte Natronlauge oder Kalilauge. Die Wanderung der dispergierten Feststoffteilchen im elektrischen Feld wird mittels der sogenannten elektrophoretischen Lichtstreuung detektiert (vgl. z.B. B.R. Ware und W.H. Flygare, Chem. Phys. Lett. 1971, 12, Seiten 81 bis 85). Dabei wird das Vorzeichen der elektrophoretischen Mobilität durch die Wanderungsrichtung der dispergierten Feststoffteilchen definiert, d.h. wandern die dispergierten Feststoffteilchen zur Kathode, ist deren elektrophoretische Mobilität positiv, wandern sie dagegen zur Anode, ist sie negativ.

Ein geeigneter Parameter, um die elektrophoretische Mobilität von dispergierten Feststoffteilchen in einem gewissen Umfang zu beinflussen oder einzustellen, ist der pH-Wert des wässrigen Reaktionsmediums. Durch Protonierung bzw. Deprotonierung der dispergierten Feststoffteilchen wird die elektrophoretische Mobilität im sauren pH-Bereich (pH-Wert < 7) in positiver und im alkalischen Bereich (pH-Wert > 7) in negativer Richtung verändert. Ein für das erfindungsgemäße Verfahren geeigneter pH-Bereich ist der, innerhalb dessen sich eine radikalisch initiierte wässrige Emulsionspolymerisation durchführen läßt. Dieser pH-Bereich liegt in der Regel bei pH 1 bis 12, häufig bei pH 1,5 bis 11 und oft bei pH 2 bis 10.

Der pH-Wert des wässrigen Reaktionsmediums kann mittels handelsüblicher Säuren, wie beispielsweise verdünnte Salz-, Salpeter- oder Schwefelsäure oder Basen, wie beispielsweise verdünnte Natron- oder Kalilauge, eingestellt werden. Häufig ist es günstig, wenn eine Teil- oder die Gesamtmenge der zur pH-Einstellung verwendeten Säure- oder Basenmenge dem wässrigen Reaktionsmedium vor dem wenigstens einen feinteiligen anorganischen Feststoff zugesetzt wird.

Von Vorteil ist, dass dann, wenn die dispergierten Feststoffteilchen unter den vorgenannten pH-Bedingungen
- eine elektrophoretische Mobilität mit negativem vorzeichen aufweisen, pro 100 Gew.-Teilen des wenigstens einen ethylenisch ungesättigten Monomeren, 0,01 bis 10 Gew.-Teile, bevorzugt 0,05 bis 5 Gew.-Teile und insbesondere bevorzugt 0,1 bis 3 Gew.-Teile wenigstens eines kationischen Dispergiermittels, 0,01 bis 100 Gew.-Teile, bevorzugt 0,05 bis 50 Gew.-Teile und insbesondere bevorzugt 0,1 bis 20 Gew.-Teile wenigstens eines nichtionischen Dispergiermittels und wenigstens ein anionisches Dispergiermittel eingesetzt werden, wobei dessen Menge so bemessen wird, dass das äquivalente Verhältnis von anionischem zu kationischem Dispergiermittel größer 1 ist, oder
- eine elektrophoretische Mobilität mit positivem Vorzeichen aufweisen, pro 100 Gew.-Teilen des wenigstens einen ethylenisch ungesättigten Monomeren, 0,01 bis 10 Gew.-Teile, bevorzugt 0,05 bis 5 Gew.-Teile und insbesondere bevorzugt 0,1 bis 3 Gew.-Teile wenigstens eines anionischen Dispergiermittels, 0,01 bis 100 Gew.-Teile, bevorzugt 0,05 bis 50 Gew.-Teile und insbesondere bevorzugt 0,1 bis 20 Gew.-Teile wenigstens eines nichtionischen Dispergiermittels und wenigstens ein kationisches Dispergiermittel eingesetzt werden, wobei dessen Menge so bemessen wird, dass das äquivalente Verhältnis von kationischem zu anionischem Dispergiermittel größer 1 ist.

Erfindungsgemäß werden im Rahmen des vorliegenden Verfahrens Dispergiermittel mitverwendet, die sowohl die feinteiligen anorganischen Feststoffteilchen als auch die Monomerentröpfchen und die gebildeten Kompositpartikel in der wässrigen Phase dispers verteilt halten und so die Stabilität der erzeugten wässrigen Kompositpartikeldispersion gewährleisten. Als Dispergiermittel kommen sowohl die zur Durchführung von radikalischen wässrigen Emulsionspolymerisationen üblicherweise eingesetzten Schutzkolloide als auch Emulgatoren in Betracht.

Eine ausführliche Beschreibung geeigneter Schutzkolloide findet sich in Houben-Weyl, Methoden der organischen Chemie, Band XIV/1, Makromolekulare Stoffe, Georg-Thieme-Verlag, Stuttgart, 1961, Seiten 411 bis 420.

Geeignete neutrale Schutzkolloide sind beispielsweise Polyvinylalkohole, Polyalkylenglykole, Cellulose-, Stärke- und Gelatinederivate.

Als anionische Schutzkolloide, d.h. Schutzkolloide, deren dispergierend wirkende Komponente wenigstens eine negative elektrische Ladung aufweist, kommen beispielsweise Polyacrylsäuren und Polymethacrylsäuren und deren Alkalimetallsalze, Acrylsäure, Methacrylsäure, 2-Acrylamido-2-methylpropansulfonsäure, 4-Styrolsulfonsäure und/oder Maleinsäureanhydrid enthaltende Copolymerisate und deren Alkalimetallsalze sowie Alkalimetallsalze von Sulfonsäuren hochmolekularer Verbindungen, wie beispielsweise Polystyrol, in Betracht.

Geeignete kationische Schutzkolloide, d.h. Schutzkolloide, deren dispergierend wirkende Komponente wenigstens eine positive elektrische Ladung aufweist, sind beispielsweise die am Stickstoff protonierten und/oder alkylierten Derivate von N-Vinylpyrrolidon, N-Vinylcaprolactam, N-Vinylcarbazol, 1-Vinylimidazol, 2-Vinylimidazol, 2-Vinylpyridin, 4-Vinylpyridin, Acrylamid, Methacrylamid, amingruppentragende Acrylate, Methacrylate, Acrylamide und/oder Methacrylamide enthaltenden Homo- und Copolymerisate.

Selbstverständlich können auch Gemische aus Emulgatoren und/oder Schutzkolloiden eingesetzt werden. Häufig werden als Dispergiermittel ausschließlich Emulgatoren eingesetzt, deren relative Molekulargewichte im Unterschied zu den Schutzkolloiden üblicherweise unter 1000 liegen. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Eine Übersicht geeigneter Emulgatoren findet sich in Houben-Weyl, Methoden der organischen Chemie, Band XIV/1, Makromolekulare Stoffe, Georg-Thieme-Verlag, Stuttgart, 1961, Seiten 192 bis 208.

Gebräuchliche nichtionische Emulgatoren sind z.B. ethoxilierte Mono-, Di- und Tri-Alkylphenole (EO-Grad: 3 bis 50, Alkylrest: C₄ bis C₁₂) sowie ethoxilierte Fettalkohole (EO-Grad: 3 bis 80; Alkylrest: C₈ bis C₃₆). Beispiele hierfür sind die Lutensol^{®} A-Marken (C₁₂C₁₄-Fettalkoholethoxilate, EO-Grad: 3 bis 8), Lutensol^{®} AO-Marken (C₁₃C₁₅-Oxoalkoholethoxilate, EO-Grad: 3 bis 30), Lutensol^{®} AT-Marken (C₁₆C₁₈-Fettalkoholethoxilate, EO-Grad: 11 bis 80), Lutensol^{®} ON-Marken (C₁₀-Oxoalkoholethoxilate, EO-Grad: 3 bis 11) und die Lutensol^{®} TO-Marken (C₁₃-Oxoalkoholethoxilate, EO-Grad: 3 bis 20) der BASF AG.

Übliche anionische Emulgatoren sind z.B. Alkalimetall- und Ammoniumsalze von Alkylsulfaten (Alkylrest: C₈ bis C₁₂), von Schwefelsäurehalbestern ethoxylierter Alkanole (EO-Grad: 4 bis 30, Alkylrest: C₁₂ bis C₁₈) und ethoxilierter Alkylphenole (EO-Grad: 3 bis 50, Alkylrest: C₄ bis C₁₂), von Alkylsulfonsäuren (Alkylrest: C₁₂ bis C₁₈) und von Alkylarylsulfonsäuren (Alkylrest: C₉ bis C₁₈) .

Als weitere anionische Emulgatoren haben sich ferner Verbindungen der allgemeinen Formel I 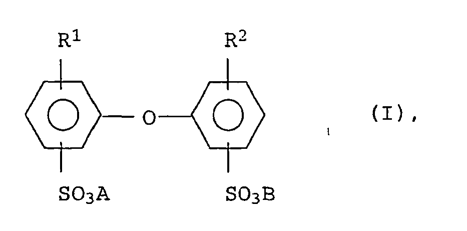 worin R¹ und R² H-Atome oder C₄- bis C₂₄-Alkyl bedeuten und nicht gleichzeitig H-Atome sind, und A und B Alkalimetallionen und/oder Ammoniumionen sein können, erwiesen. In der allgemeinen Formel I bedeuten R¹ und R² bevorzugt lineare oder verzweigte Alkylreste mit 6 bis 18 C-Atomen, insbesondere mit 6, 12 und 16 C-Atomen oder -H, wobei R¹ und R² nicht beide gleichzeitig H-Atome sind. A und B sind bevorzugt Natrium, Kalium oder Ammonium, wobei Natrium besonders bevorzugt ist. Besonders vorteilhaft sind Verbindungen I, in denen A und B Natrium, R¹ ein verzweigter Alkylrest mit 12 C-Atomen und R² ein H-Atom oder R¹ ist. Häufig werden technische Gemische verwendet, die einen Anteil von 50 bis 90 Gew.-% des monoalkylierten Produktes aufweisen, wie beispielsweise Dowfax^{®} 2A1 (Marke der Dow Chemical Company). Die Verbindungen I sind allgemein bekannt, z.B. aus US-A 4 269 749, und im Handel erhältlich.

Geeignete kationenaktive Emulgatoren sind in der Regel einen C₆-bis C₁₈-Alkyl-, -Aralkyl- oder heterocyclischen Rest aufweisende primäre, sekundäre, tertiäre oder quartäre Ammoniumsalze, Alkanolammoniumsalze, Pyridiniumsalze, Imidazoliniumsalze, Oxazoliniumsalze, Morpholiniumsalze, Thiazoliniumsalze sowie Salze von Aminoxiden, Chinoliniumsalze, Isochinoliniumsalze, Tropyliumsalze, Sulfoniumsalze und Phosphoniumsalze. Beispielhaft genannt seien Dodecylammoniumacetat oder das entsprechende Hydrochlorid, die Chloride oder Acetate der verschiedenen 2-(N,N,N-Trimethylammonium)ethylparaffinsäureester, N-Cetylpyridiniumchlorid, N-Laurylpyridiniumsulfat sowie N-Cetyl-N,N,N-trimethylammoniumbromid, N-Dodecyl-N,N,N-trimethylammoniumbromid, N-Octyl-N,N,N-trimethlyammoniumbromid, N,N-Distearyl-N,N-dimethylammoniumchlorid sowie das Gemini-Tensid N,N'-(Lauryldimethyl)ethylendiamindibromid. Zahlreiche weitere Beispiele finden sich in H. Stache, Tensid-Taschenbuch, Carl-Hanser-Verlag, München, Wien, 1981 und in McCutcheon's, Emulsifiers & Detergents, MC Publishing Company, Glen Rock, 1989.

Unter äquivalentem Verhältnis von anionischem zu kationischem Dispergiermittel soll in dieser Anmeldung das Verhältnis der eingesetzten Molzahl des anionischen Dispergiermittels multipliziert mit der Anzahl der pro Mol des anionischen Dispergiermittels enthaltenen anionischen Gruppen dividiert durch die eingesetzte Molzahl des kationischen Dispergiermittels multipliziert mit der Anzahl der pro Mol des kationischen Dispergiermittels enthaltenen kationischen Gruppen verstanden werden. Entsprechendes gilt für das äquvalente Verhältnis von kationischem zu anionischem Dispergiermittel.

Die Gesamtmenge des im Verfahren verwendeten wenigstens einen anionischen, kationischen und nichtionischen Dispergiermittels kann in der wässrigen Feststoffdispersion vorgelegt werden. Es ist jedoch auch möglich, lediglich eine Teilmenge der genannten Dispergiermittel, in der wässrigen Feststoffdispersion vorzulegen und die verbliebenen Restmengen während der radikalischen Emulsionspolymerisation kontinuierlich oder diskontinuierlich zuzugeben. Verfahrenswesentlich ist jedoch, dass vor und während der radikalisch initiierten Emulsionspolymerisation das vorgenannte äquivalente Verhältnis von anionischem und kationischem Dispergiermittel in Abhängigkeit vom elektrophoretischen Vorzeichen des feinteiligen Feststoffs aufrechterhalten wird. Werden daher anorganische Feststoffteilchen eingesetzt, welche unter den vorgenannten pH-Bedingungen eine elektrophoretische Mobilität mit negativem Vorzeichen aufweisen, so muss das äquivalente Verhältnis von anionischem zu kationischem Dispergiermittel während der gesamten Emulsionspolymerisation größer 1 sein. In entsprechender Weise muss bei anorganischen Feststoffteilchen mit einer elektrophoretischen Mobilität mit positivem Vorzeichen das äquivalente Verhältnis von kationischem zu anionischem Dispergiermittel während der gesamten Emulsionspolymerisation größer 1 sein. Günstig ist es, wenn das äquivalente Verhältnis ≥ 2, ≥ 3, ≥ 4, ≥ 5, ≥ 6, ≥ 7, oder ≥ 10 ist, wobei das äquivalente Verhältnis im Bereich zwischen 2 und 5 besonders günstig ist.

Von Vorteil ist es, wenn eine Teil- oder die Gesamtmenge des wenigstens einen nichtionischen Dispergiermittels vor dem wenigstens einen anionischen und kationischen Dispergiermittel zugegeben wird.

Die Durchführung einer radikalisch initiierten wässrigen Emulsionspolymerisation von ethylenisch ungesättigten Monomeren ist vielfach vorbeschrieben und dem Fachmann daher hinreichend bekannt [vgl. z.B. Encyclopedia of Polymer Science and Engineering, Vol. 8, Seiten 659 bis 677, John Wiley & Sons, Inc., 1987; D.C. Blackley, Emulsion Polymerisation, Seiten 155 bis 465, Applied Science Publishers, Ltd., Essex, 1975; D.C. Blackley, Polymer Latices, 2nd Edition, Vol. 1, Seiten 33 bis 415, Chapman & Hall, 1997; H. Warson, The Applications of Synthetic Resin Emulsions, Seiten 49 bis 244, Ernest Benn, Ltd., London, 1972; D. Diederich, Chemie in unserer Zeit 1990, 24, Seiten 135 bis 142, Verlag Chemie, Weinheim; J. Piirma, Emulsion Polymerisation, Seiten 1 bis 287, Academic Press, 1982; F. Hölscher, Dispersionen synthetischer Hochpolymerer, Seiten 1 bis 160, Springer-Verlag, Berlin, 1969 und die Patentschrift DE-A 40 03 422]. Sie erfolgt üblicherweise so, dass man die ethylenisch ungesättigten Monomeren unter Mitverwendung von Dispergiermitteln, in wässrigem Medium dispers verteilt und mittels wenigstens eines radikalischen Polymerisationsinitiators polymerisiert. Von dieser Verfahrensweise unterscheidet sich das erfindungsgemäße Verfahren lediglich durch ein zusätzliches Beisein von wenigstens einem feinteiligen anorganischen Feststoff, welcher eine von Null verschiedene elektrophoretische Mobilität aufweist sowie der Verwendung einer speziellen Dispergiermittelkombination.

Für das erfindungsgemäße Verfahren kommen als wenigstens ein ethylenisch ungesättigtes Monomer u.a. insbesondere in einfacher Weise radikalisch polymerisierbare Monomere in Betracht, wie beispielsweise Ethylen, vinylaromatische Monomere, wie Styrol, α-Methylstyrol, o-Chlorstyrol oder Vinyltoluole, Ester aus Vinylalkohol und 1 bis 18 C-Atome aufweisenden Monocarbonsäuren, wie Vinylacetat, Vinylpropionat, Vinyl-n-butyrat, Vinyllaurat und Vinylstearat, Ester aus vorzugsweise 3 bis 6 C-Atome aufweisenden α,β-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen, wie besonders Acrylsäure- und Methacrylsäuremethyl-, -ethyl-, -n-butyl-, -iso-butyl und -2-ethylhexylester, Maleinsäuredimethylester oder Maleinsäure-di-n-butylester, Nitrile α,β-monoethylenisch ungesättigter Carbonsäuren, wie Acrylnitril sowie C₄₋₈-konjugierte Diene, wie 1,3-Butadien und Isopren. Die genannten Monomere bilden in der Regel die Hauptmonomeren, die, bezogen auf die Gesamtmenge der nach dem erfindungsgemäßen Verfahren zu polymerisierenden Monomeren normalerweise einen Anteil von ≥ 50 Gew.-%, ≥ 80 Gew.-% oder ≥ 90 Gew.-% auf sich vereinen. In aller Regel weisen diese Monomeren in Wasser bei Normalbedingungen [20 °C, 1 bar (absolut)] lediglich eine mäßige bis geringe Löslichkeit auf.

Monomere, die üblicherweise die innere Festigkeit der Verfilmungen der Polymermatrix erhöhen, weisen normalerweise wenigstens eine Epoxy-, Hydroxy-, N-Methylol- oder Carbonylgruppe, oder wenigstens zwei nicht konjugierte ethylenisch ungesättigte Doppelbindungen auf. Beispiele hierfür sind zwei Vinylreste aufweisende Monomere, zwei Vinylidenreste aufweisende Monomere sowie zwei Alkenylreste aufweisende Monomere. Besonders vorteilhaft sind dabei die Di-Ester zweiwertiger Alkohole mit α,β-monoethylenisch ungesättigten Monocarbonsäuren unter denen die Acryl- und Methacrylsäure bevorzugt sind. Beispiele für derartige zwei nicht konjugierte ethylenisch ungesättigte Doppelbindungen aufweisende Monomere sind Alkylenglykoldiacrylate und -dimethacrylate, wie Ethylenglykoldiacrylat, 1,2-Propylenglykoldiacrylat, 1,3-Propylenglykoldiacrylat, 1,3-Butylenglykoldiacrylat, 1,4-Butylenglykoldiacrylate und Ethylenglykoldimethacrylat, 1,2-Propylenglykoldimethacrylat, 1,3-Propylenglykoldimethacrylat, 1,3-Butylenglykoldimethacrylat, 1,4-Butylenglykoldimethacrylat sowie Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat, Triallylcyanurat oder Triallylisocyanurat. In diesem Zusammenhang von besonderer Bedeutung sind auch die Methacrylsäure- und Acrylsäure-C₁-C₈-Hydroxyalkylester wie n-Hydroxyethyl-, n-Hydroxypropyl- oder n-Hydroxybutylacrylat und -methacrylat sowie Verbindungen, wie Diacetonacrylamid und Acetylacetoxyethylacrylat bzw. -methacrylat. Erfindungsgemäß werden die vorgenannten Monomeren, bezogen auf die Gesamtmenge der zu polymerisierenden Monomeren, in Mengen von bis zu 5 Gew.-% einpolymerisiert.

Optional sind auch Siloxangruppen enthaltende Monomere, wie die Vinyltrialkoxysilane, beispielsweise Vinyltrimethoxysilan, Alkylvinyldialkoxysilane, Acryloxyalkyltrialkoxysilane, oder Methacryloxyalkyltrialkoxysilane, wie beispielsweise Acryloxyethyltrimethoxysilan, Methacryloxyethyltrimethoxysilan, Acryloxypropyltrimethoxysilan oder Methacryloxypropyltrimethoxysilan einsetzbar. Diese Monomere werden in Mengen von bis zu 2 Gew.-%, häufig 0,01 bis 1 Gew.-% und oft von 0,05 bis 0,5 Gew.-%, jeweils bezogen auf die Gesamtmonomerenmenge, verwendet.

Daneben können als Monomere zusätzlich solche ethylenisch ungesättigten Monomere A, die entweder wenigstens eine Säuregruppe und/oder deren entsprechendes Anion oder solche ethylenisch ungesättigten Monomere B, die wenigstens eine Amino-, Amido-, Ureido- oder N-heterocyclische Gruppe und/oder deren am Stickstoff protonierten oder alkylierten Ammoniumderivate enthalten, eingesetzt werden. Bezogen auf die Gesamtmonomerenmenge, beträgt die Menge an Monomeren A bzw. Monomeren B bis zu 10 Gew.-%, oft 0,1 bis 7 Gew.-% und häufig 0,2 bis 5 Gew.-%.

Als Monomere A werden ethylenisch ungesättigte Monomere mit wenigstens einer Säuregruppe eingesetzt. Dabei kann die Säuregruppe beispielsweise eine Carbonsäure-, Sulfonsäure-, Schwefelsäure-, Phosphorsäure- und/oder Phosphonsäuregruppe sein. Beispiele für Monomere A sind Acrylsäure, Methacrylsäure, Maleinsäure, Fumarsäure, Itaconsäure, Crotonsäure, 4-Styrolsulfonsäure, 2-Methacryloxyethylsulfonsäure, Vinylsulfonsäure und Vinylphosphonsäure sowie Phosphorsäuremonoester von n-Hydroxyalkylacrylaten und n-Hydroxyalkylmethacrylaten, wie beispielsweise Phosphorsäuremonoester von Hydroxyethylacrylat, n-Hydroxypropylacrylat, n-Hydroxybutylacrylat und Hydroxyethylmethacrylat, n-Hydroxypropylmethacrylat oder n-Hydroxybutylmethacrylat. Erfindungsgemäß lassen sich aber auch die Ammonium- und Alkalimetallsalze der vorgenannten wengistens eine Säuregruppe aufweisenden ethylenisch ungesättigten Monomeren einsetzen. Als Alkalimetall insbesondere bevorzugt ist Natrium und Kalium. Beispiele hierfür sind die Ammonium-, Natrium- und Kaliumsalze der Acrylsäure, Methacrylsäure, Maleinsäure, Fumarsäure, Itaconsäure, Crotonsäure, 4-Styrolsulfonsäure, 2-Methacryloxyethylsulfonsäure, Vinylsulfonsäure und Vinylphosphonsäure sowie die Mono- und Di-Ammonium-, -Natrium- und -Kaliumsalze der Phosphorsäuremonoester von Hydroxyethylacrylat, n-Hydroxypropylacrylat, n-Hydroxybutylacrylat und Hydroxyethylmethacrylat, n-Hydroxypropylmethacrylat oder n-Hydroxybutylmethacrylat.

Bevorzugt werden Acrylsäure, Methacrylsäure, Maleinsäure, Fumarsäure, Itaconsäure, Crotonsäure, 4-Styrolsulfonsäure, 2-Methacryloxyethylsulfonsäure, Vinylsulfonsäure und Vinylphosphonsäure eingesetzt.

Als Monomere B werden ethylenisch ungesättigte Monomere verwendet, die wenigstens eine Amino-, Amido-, Ureido- oder N-heterocyclische Gruppe und/oder deren am Stickstoff protonierten oder alkylierten Ammoniumderivate enthalten.

Beispiele für Monomere B, die wenigstens eine Aminogruppe enthalten sind 2-Aminoethylacrylat, 2-Aminoethylmethacrylat, 3-Aminopropylacrylat, 3-Aminopropylmethacrylat, 4-Amino-n-butylacrylat, 4-Amino-n-butylmethacrylat, 2-(N-Methylamino)ethylacrylat, 2-(N-Methylamino)ethylmethacrylat, 2-(N-Ethylamino)ethylacrylat, 2-(N-Ethylamino)ethylmethacrylat, 2-(N-n-Propylamino)ethylacrylat, 2-(N-n-Propylamino)ethylmethacrylat, 2-(N-iso-Propylamino)ethylacrylat, 2-(N-iso-Propylamino)ethylmethacrylat, 2-(N-tert.-Butylamino)ethylacrylat, 2-(N-tert.-Butylamino)ethylmethacrylat (beispielsweise kommerziell verfügbar als Norsocryl^{®} TBAEMA der Fa. Elf Atochem), 2-(N,N-Dimethylamino)ethylacrylat (beispielsweise kommerziell verfügbar als Norsocryl^{®} ADAME der Fa. Elf Atochem), 2-(N,N-Dimethylamino)ethylmethacrylat (beispielsweise kommerziell verfügbar als Norsocryl^{®} MADAME der Fa. Elf Atochem), 2-(N,N-Diethylamino)ethylacrylat, 2-(N,N-Diethylamino)ethylmethacrylat, 2-(N,N-Di-n-propylamino)ethylacrylat, 2-(N,N-Di-n-propylamino)ethylmethacrylat, 2-(N,N-Di-iso-propylamino)ethylacrylat, 2-(N,N-Di-iso-propylamino)ethylmethacrylat, 3-(N-Methylamino)propylacrylat, 3-(N-Methylamino)propylmethacrylat, 3-(N-Ethylamino)propylacrylat, 3-(N-Ethylamino)propylmethacrylat, 3-(N-n-Propylamino)propylacrylat, 3-(N-n-Propylamino)propylmethacrylat, 3-(N-iso-Propylamino)propylacrylat, 3-(N-iso-Propylamino)propylmethacrylat, 3-(N-tert.-Butylamino)propylacrylat, 3-(N-tert.-Butylamino)propylmethacrylat, 3-(N,N-Dimethylamino)propylacrylat, 3-(N,N-Dimethylamino)propylmethacrylat, 3-(N,N-Diethylamino)propylacrylat, 3-(N,N-Diethylamino)propylmethacrylat, 3-(N,N-Di-n-propylamino)propylacrylat, 3-(N,N-Di-n-propylamino)propylmethacrylat, 3-(N,N-Di-iso-propylamino)propylacrylat und 3-(N,N-Di-iso-propylamino)propylmethacrylat.

Beispiele für Monomere B, die wenigstens eine Amidogruppe enthalten sind Acrylamid, Methacrylamid, N-Methylacrylamid, N-Methylmethacrylamid, N-Ethylacrylamid, N-Ethylmethacrylamid, N-n-Propylacrylamid, N-n-Propylmethacrylamid, N-iso-Propylacrylamid, N-iso-Propylmethacrylamid, N-tert.-Butylacrylamid, N-tert.-Butylmethacrylamid, N,N-Dimethylacrylamid, N,N-Dimethylmethacrylamid, N,N-Diethylacrylamid, N,N-Diethylmethacrylamid, N,N-Di-n-propylacrylamid, N,N-Di-n-propylmethacrylamid, N,N-Di-iso-propylacrylamid, N,N-Di-iso-propylmethacrylamid, N,N-Di-n-butylacrylamid, N,N-Di-n-butylmethacrylamid, N-(3-N',N'-Dimethylaminopropyl)methacrylamid, Diacetonacrylamid, N,N'-Methylenbisacrylamid, N-(Diphenylmethyl)acrylamid, N-Cyclohexylacrylamid, aber auch N-Vinylpyrrolidon und N-Vinylcaprolactam.

Beispiele für Monomere B, die wenigstens eine Ureidogruppe enthalten sind N,N'-Divinylethylenharnstoff und 2-(1-Imidazolin-2-onyl)ethylmethacrylat (beispielsweise kommerziell verfügbar als Norsocryl^{®} 100 der Fa. Elf Atochem).

Beispiele für Monomere B, die wenigstens eine N-heterocyclische Gruppe enthalten sind 2-Vinylpyridin, 4-Vinylpyridin, 1-Vinylimidazol, 2-Vinylimidazol und N-Vinylcarbazol.

Bevorzugt werden folgende Verbindungen eingesetzt: 2-Vinylpyridin, 4-Vinylpyridin, 2-Vinylimidazol, 2-(N,N-Dimethylamino) ethylacrylat, 2-(N,N-Dimethylamino)ethylmethacrylat, 2-(N,N-Diethylamino)ethylacrylat, 2-(N,N-Diethylamino)ethylmethacrylat, 2-(N-tert.-Butylamino)ethylmethacrylat, N-(3-N',N'-Dimethylaminopropyl)methacrylamid und 2-(1-Imidazolin-2-onyl)ethylmethacrylat.

Abhängig vom pH-Wert des wässrigen Reaktionsmediums kann eine Teil- oder die Gesamtmenge der vorgenannten stickstoffhaltigen Monomere B in der am Stickstoff protonierten quartären Ammoniumform vorliegen.

Als Monomere B, welche am Stickstoff eine quartäre Alkylammoniumstruktur aufweisen, seien beispielhaft genannt 2-(N,N,N-Trimethylammonium)ethylacrylatchlorid (beispielsweise kommerziell verfügbar als Norsocryl^{®} ADAMQUAT MC 80 der Fa. Elf Atochem), 2-(N,N,N-Trimethylammonium)ethylmethacrylatchlorid (beispielsweise kommerziell verfügbar als Norsocryl^{®} MADQUAT MC 75 der Fa. Elf Atochem), 2-(N-Methyl-N,N-diethylammonium)ethylacrylatchlorid, 2-(N-Methyl-N,N-diethylammonium)ethylmethacrylatchlorid, 2-(N-Methyl-N,N-dipropylammonium)ethylacrylatchlorid, 2-(N-Methyl-N,N-dipropylammonium)ethylmethacrylat, 2-(N-Benzyl-N,N-dimethylammonium)ethylacrylatchlorid (beispielsweise kommerziell verfügbar als Norsocryl^{®} ADAMQUAT BZ 80 der Fa. Elf Atochem), 2-(N-Benzyl-N,N-dimethylammonium)ethylmethacrylatchlorid (beispielsweise kommerziell verfügbar als Norsocryl^{®} MADQUAT BZ 75 der Fa. Elf Atochem), 2-(N-Benzyl-N,N-diethylammonium)ethylacrylatchlorid, 2-(N-Benzyl-N,N-diethylammonium)ethylmethacrylatchlorid, 2-(N-Benzyl-N,N-dipropylammonium)ethylacrylatchlorid, 2-(N-Benzyl- N,N-dipropylammonium)ethylmethacrylatchlorid, 3-(N,N,N-Trimethylammonium)propylacrylatchlorid, 3-(N,N,N-Trimethylammonium)propylmethacrylatchlorid, 3-(N-Methyl-N,N-diethylammonium)propylacrylatchlorid, 3-(N-Methyl-N,N-diethylammonium)propylmethacrylatchlorid, 3-(N-Methyl-N,N-dipropylammonium)propylacrylatchlorid, 3-(N-Methyl-N,N-dipropylammonium)propylmethacrylatchlorid, 3-(N-Benzyl-N,N-dimethylammonium)propylacrylatchlorid, 3-(N-Benzyl- N,N-dimethylammonium)propylmethacrylatchlorid, 3-(N-Benzyl- N,N-diethylammonium)propylacrylatchlorid, 3-(N-Benzyl-N,N-diethylammonium)propylmethacrylatchlorid, 3-(N-Benzyl-N,N-dipropylammonium)propylacrylatchlorid und 3-(N-Benzyl-N,N-dipropylammonium)propylmethacrylatchlorid. Selbstverständlich können an Stelle der genannten Chloride auch die entsprechenden Bromide und Sulfate eingesetzt werden.

Bevorzugt werden 2-(N,N,N-Trimethylammonium)ethylacrylatchlorid, 2-(N,N,N-Trimethylammonium)ethylmethacrylatchlorid, 2-(N-Benzyl-N,N-dimethylammonium)ethylacrylatchlorid und 2-(N-Benzyl-N,N-dimethylammonium)ethylmethacrylatchlorid verwendet.

Selbstverständlich können als wenigstens ein ethylenisch ungesättigtes Monomer auch Gemische der vorgenannten ethylenisch ungesättigten Monomere eingesetzt werden.

Von Bedeutung ist, dass im Falle des Vorliegens von dispergierten Feststoffteilchen mit einer elektrophoretischen Mobilität mit negativem Vorzeichen, eine Teil- oder die Gesamtmenge des wenigstens einen anionischen Dispergiermittels durch die äquvalente Menge wenigstens eines Monomeren A und im Falle des Vorliegens von dispergierten Feststoffteilchen mit einer elektrophoretischen Mobilität mit positivem Vorzeichen, eine Teil- oder die Gesamtmenge des wenigstens einen kationischen Dispergiermittels durch die äquivalente Menge wenigstens eines Monomeren B ersetzt werden kann.

Als wenigstens ein radikalischer Polymerisationsinitiator kommen für die erfindungsgemäße radikalische wässrige Emulsionpolymerisation alle diejenigen in Betracht, die in der Lage sind, eine radikalische wässrige Emulsionspolymerisation im Beisein des wenigstens eines feinteiligen anorganischen Feststoffes auszulösen. Es kann sich dabei prinzipiell sowohl um Peroxide als auch um Azoverbindungen handeln. Selbstverständlich kommen auch Redoxinitiatorsysteme in Betracht. Als Peroxide können prinzipiell anorganische Peroxide, wie Wasserstoffperoxid oder Peroxodisulfate, wie die Mono- oder Di-Alkalimetall- oder Ammoniumsalze der Peroxodischwefelsäure, wie beispielsweise deren Mono- und Di-Natrium-, -Kalium- oder Ammoniumsalze oder organische Peroxide, wie Alkylhydroperoxide, beispielsweise tert.-Butyl-, p-Mentyl- oder Cumylhydroperoxid, sowie Dialkyl- oder Diarylperoxide, wie Di-tert.-Butyl- oder Di-Cumylperoxid eingesetzt werden. Als Azoverbindung finden im wesentlichen 2,2'-Azobis(isobutyronitril), 2,2'-Azobis(2,4-dimethylvaleronitril) und 2,2'-Azobis(amidinopropyl)dihydrochlorid (AIBA, entspricht V-50 von Wako Chemicals) Verwendung. Als Oxidationsmittel für Redoxinitiatorsysteme kommen im wesentlichen die oben genannten Peroxide in Betracht. Als entsprechende Reduktionsmittel können Schwefelverbindungen mit niedriger Oxidationsstufe, wie Alkalisulfite, beispielsweise Kalium- und/oder Natriumsulfit, Alkalihydrogensulfite, beispielsweise Kalium- und/oder Natriumhydrogensulfit, Alkalimetabisulfite, beispielsweise Kalium- und/oder Natriummetabisulfit, Formaldehydsulfoxylate, beispielsweise Kalium- und/oder Natriumformaldehydsulfoxylat, Alkalisalze, speziell Kalium- und/oder Natriumsalze aliphatische Sulfinsäuren und Alkalimetallhydrogensulfide, wie beispielsweise Kalium- und/oder Natriumhydrogensulfid, Salze mehrwertiger Metalle, wie Eisen-(II)-sulfat, Eisen-(II)-Ammoniumsulfat, Eisen-(II)-phosphat, Endiole, wie Dihydroxymaleinsäure, Benzoin und/oder Ascorbinsäure sowie reduzierende Saccharide, wie Sorbose, Glucose, Fructose und/oder Dihydroxyaceton eingesetzt werden. In der Regel beträgt die Menge des eingesetzten radikalischen Polymerisationsinitiators, bezogen auf die Gesamtmenge des Monomerengemisches, 0,1 bis 5 Gew.-%.

Erfindungsgemäß kann die Gesamtmenge des wenigstens einen radikalischen Polymerisationsinitiators gemeinsam mit dem wenigstens einen feinteiligen anorganischen Feststoff im Reaktionsmedium vorgelegt werden. Es ist aber auch möglich, gegebenenfalls lediglich eine Teilmenge des wenigstens einen radikalischen Polymerisationsinitiators in der wässrigen Feststoffdispersion vorzulegen und dann während der erfindungsgemäßen radikalischen Emulsionspolymerisation die Gesamtmenge bzw. die gegebenenfalls verbliebene Restmenge nach Maßgabe des Verbrauchs kontinuierlich oder diskontinuierlich zuzugeben.

Wesentlich für das erfindungsgemäße Verfahren ist, dass der wässrigen Feststoffteilchendispersion zuerst die vorgenannten Dispergiermittel zugesetzt, daran anschließend 0,01 bis 30 Gew.-%, oft 0,5 bis 20 Gew.-% und häufig 1 bis 10 Gew.-% der Gesamtmenge des wenigstens einen Monomeren diskontinuierlich in einer Portion zugegeben und diese bis zu einem Umsatz von wenigstens 90 %, bevorzugt ≥ 95 % polymerisiert werden. Daran anschließend wird die Restmenge des wenigstens einen ethylenisch ungesättigten Monomeren unter Polymerisationsbedingungen nach Maßgabe des Verbrauchs kontinuierlich oder diskontinuierlich zugegeben. Dabei kann die Zugabe der Monomeren in Substanz oder aber auch in Form einer wässrigen Monomerenemulsion erfolgen.

Als Reaktionstemperatur für die erfindungsgemäße radikalische wässrige Emulsionspolymerisation im Beisein des wenigstens einen feinteiligen anorganischen Feststoffes kommt der gesamte Bereich von 0 bis 170 °C in Betracht. Dabei werden in der Regel Temperaturen von 50 bis 120 °C, häufig 60 bis 110 °C und oft ≥ 70 bis 100°C angewendet. Die erfindungsgemäße radikalische wässrige Emulsionspolymerisation kann bei einem Druck kleiner, gleich oder größer 1 bar (absolut) durchgeführt werden, so dass die Polymerisationstemperatur 100 °C übersteigen und bis zu 170 °C betragen kann. Vorzugsweise werden leichtflüchtige Monomere wie Ethylen, Butadien oder Vinylchlorid unter erhöhtem Druck polymerisiert. Dabei kann der Druck 1,2, 1,5, 2, 5, 10, 15 bar oder noch höhere Werte einnehmen. Werden Emulsionspolymerisationen im Unterdruck durchgeführt, werden Drücke von 950 mbar, häufig von 900 mbar und oft 850 mbar (absolut) eingestellt. Vorteilhaft wird die erfindungsgemäße radikalische wässrige Emuslionspolymerisation bei 1 bar (absolut) unter Inertgasatmosphäre, wie beispielsweise unter Stickstoff oder Argon durchgeführt.

Das wässrige Reaktionsmedium kann prinzipiell auch wasserlösliche organische Lösungsmittel, wie beispielsweise Methanol, Ethanol, Isopropanol, Butanole, Pentanole, aber auch Aceton etc. umfassen. Bevorzugt wird das erfindungsgemäße Verfahren jedoch in Abwesenheit solcher Lösungsmittel durchgeführt.

Neben den vorgenannten Komponenten können im erfindungsgemäßen Verfahren optional auch radikalkettenübertragende Verbindungen eingesetzt werden, um das Molekulargewicht der durch die Polymerisation zugänglichen Polymerisate zu reduzieren bzw. zu kontrollieren. Dabei kommen im wesentlichen aliphatische und/oder araliphatische Halogenverbindungen, wie beispielsweise n-Butylchlorid, n-Butylbromid, n-Butyljodid, Methylenchlorid, Ethylendichlorid, Chloroform, Bromoform, Bromtrichlormethan, Dibromdichlormethan, Tetrachlorkohlenstoff, Tetrabromkohlenstoff, Benzylchlorid, Benzylbromid, organische Thioverbindungen, wie primäre, sekundäre oder tertiäre aliphatische Thiole, wie beispielsweise Ethanthiol, n-Propanthiol, 2-Propanthiol, n-Butanthiol, 2-Butanthiol, 2-Methyl-2-propanthiol, n-Pentanthiol, 2-Pentanthiol, 3-Pentanthiol, 2-Methyl-2-butanthiol, 3-Methyl-2-butanthiol, n-Hexanthiol, 2-Hexanthiol, 3-Hexanthiol, 2-Methyl-2-pentanthiol, 3-Methyl-2-pentanthiol, 4-Methyl-2-pentanthiol, 2-Methyl-3-pentanthiol, 3-Methyl-3-pentanthiol, 2-Ethylbutanthiol, 2-Ethyl-2-butanthiol, n-Heptanthiol und seine isomeren Verbindungen, n-Octanthiol und seine isomeren Verbindungen, n-Nonanthiol und seine isomeren Verbindungen, n-Decanthiol und seine isomeren Verbindungen, n-Undecanthiol und seine isomeren Verbindungen, n-Dodecanthiol und seine isomeren Verbindungen, n-Tridecanthiol und seine isomeren Verbindungen, substituierte Thiole, wie beispielsweise 2-Hydroxyethanthiol, aromatische Thiole, wie Benzolthiol, ortho-, meta-, oder para-Methylbenzolthiol, sowie alle weiteren im Polymerhandbook 3rd edtition, 1989, J. Brandrup und E.H. Immergut, John Weley & Sons, Abschnitt II, Seiten 133 bis 141, beschriebenen Schwefelverbindungen, aber auch aliphatische und/oder aromatische Aldehyde, wie Acetaldeyhd, Propionaldehyd und/oder Benzaldehyd, ungesättigte Fettsäuren, wie Ölsäure, Diene mit nicht konjugierten Doppelbindungen, wie Divinylmethan oder Vinylcyclohexan oder Kohlenwasserstoffe mit leicht abstrahierbaren Wasserstoffatomen, wie beispielsweise Toluol, zum Einsatz. Es ist aber auch möglich, Gemische sich nicht störender vorgenannter radikalkettenübertragender Verbindungen einzusetzen.

Die im erfindungsgemäßen Verfahren optional eingesetzte Gesamtmenge der radikalkettenübertragenden Verbindungen, bezogen auf die Gesamtmenge der zu polymerisierenden Monomeren, ist in der Regel ≤ 5 Gew.-%, oft ≤ 3 Gew.-% und häufig ≤ 1 Gew.-%.

Günstig ist es, wenn eine Teil- oder die Gesamtmenge der optional eingesetzten radikalkettenübertragenden Verbindung dem Reaktionsmedium vor der Initiierung der radikalischen Polymerisation zugeführt wird. Darüber hinaus kann eine Teil- oder die Gesamtmenge die radikalkettenübertragende Verbindung dem Reaktionsmedium vorteilhaft auch gemeinsam mit dem wenigstens einen ethylenisch ungesättigten Monomeren während der Polymerisation zugeführt werden.

Das erfindungsgemäße Verfahren kann beispielsweise so ausgeübt werden, dass man eine stabile wässrige Dispersion des wenigstens einen feinteiligen anorganischen Feststoffs, enthaltend entweder eine Teil- oder die Gesamtmenge des benötigten Wassers, des wenigstens einen anionischen, kationischen und nichtionischen Dispergiermittels, des wenigstens einen Polymerisationsinitiators und 0,01 bis 30 Gew.-% der Gesamtmenge des wenigstens einen ethylenisch ungesättigten Monomeren sowie der gegebenenfalls weiteren üblichen Hilfs- und Zusatzstoffe in einem Reaktionsbehälter vorlegt und den Inhalt des Reaktionsbehälters auf Reaktionstemperatur aufheizt. Nachdem das wenigstens eine ethylenisch ungesättigte Monomere bis zu einem Umsatz von wengstens 90 % polymerisiert ist, wird bei dieser Temperatur die gegebenenfalls verbliebenen Restmengen des Wassers, des wenigstens einen anionischen, kationischen und nichtionischen Dispergiermittels, des wenigstens einen ethylenisch ungesättigten Monomeren sowie der gegebenenfalls weiteren üblichen Hilfs- und Zusatzstoffe kontinuierlich oder diskontinuierlich zugesetzt und anschließend gegebenenfalls noch weiter auf Reaktionstemperatur gehalten.

Die erfindungsgemäß zugänglichen wässrigen Dispersionen von Kompositpartikeln weisen üblicherweise einen Feststoffgehalt von 1 bis 70 Gew.-%, häufig von 5 bis 65 Gew.-% und oft von 10 bis 60 Gew.-% auf.

Die erfindungsgemäß zugänglichen Kompositpartikel besitzen in der Regel Teilchendurchmesser von ≤ 1000 nm, häufig ≤ 500 nm und oft ≤ 250 nm. Auch die Bestimmung dieser Teilchendurchmesser erfolgt durch die Methode der Analytischen Ultrazentrifuge. Die angegebenen Werte entsprechen den sogenannten d₅₀-Werten.

Die nach dem erfindungsgemäßen Verfahren erhältlichen Kompositpartikel können unterschiedliche Strukturen aufweisen. Die erfindungsgemäßen Kompositpartikel können ein oder mehrere der feinteiligen Feststoffteilchen enthalten. Die feinteiligen Feststoffteilchen können vollständig von der Polymermatrix umhüllt sein. Es ist aber auch möglich, dass ein Teil der feinteiligen Feststoffteilchen von der Polymermatrix umhüllt ist, während ein anderer Teil auf der Oberfläche der Polymermatrix angeordnet ist. Selbstverständlich ist es auch möglich, dass ein Großteil der feinteiligen Feststoffpartikel auf der Oberfläche der Polymermatrix gebunden ist. Zu beachten ist, dass es in Einzelfällen, abhängig von der Feststoffkonzentration der dispergierten Kompositpartikel, auch zu einer geringen Teilagglomeration der Kompositpartikel kommen kann.

Selbstverständlich können die nach Abschluß der Hauptpolymerisationsreaktion in der wässrigen Dispersion der Kompositpartikel verbliebenen Monomerenrestmengen durch Dampf- und/oder Inertgasstrippung und/oder durch chemische Desodorierung, wie sie beispielsweise in den Schriften DE-A 4 419 518, EP-A 767 180 oder DE-A 3 834 734 beschrieben sind, entfernt werden, ohne dass sich die Eigenschaften der wässrigen Kompositpartikeldispersion nachteilig verändern.

Aus den über das erfindungsgemäße Verfahren zugänglichen wässrigen Kompositpartikeldispersionen lassen sich in einfacher Weise anorganische Feststoffteilchen enthaltende Polymerisatfilme herstellen. Diese Polymerisatfilme weisen gegenüber den keine anorganischen Feststoffteilchen enthaltenden Polymerisatfilmen in der Regel eine erhöhte mechanische Festigkeit, ein geringeres Weißanlaufen, eine bessere Haftung an mineralischen Oberflächen, eine verbesserte Resistenz gegenüber organischen Lösemitteln sowie eine erhöhte Kratzfestigkeit, Blockfestigkeit und Wärmestandfestigkeit auf. Eine insbesondere geringere Empfindlichkeit der Polymerisatfilme gegenüber organischen Lösemitteln und Wasser weisen Filme von wässrigen Kompositpartikeldispersionen auf, in deren Polymerisate Siloxangruppen enthaltende Monomere einpolymerisiert wurden.

Wässrige Dispersionen von Kompositpartikeln, welche nach dem beschriebenen erfindungsgemäßen Verfahren hergestellt werden, eignen sich daher als Rohstoffe zur Herstellung von Klebstoffen, wie beispielsweise Haftklebstoffen, Bauklebstoffen oder Industrieklebstoffen, Bindemitteln, wie beispielsweise für die Papierstreicherei, Dispersionsfarben oder für Druckfarben und Drucklacke zum Bedrucken von Kunststofffolien, zur Herstellung von Vliesstoffen sowie zur Herstellung von Schutzschichten und Wasserdampfsperren, wie beispielsweise bei der Grundierung. Ferner lassen sich die dem erfindungsgemäßen Verfahren zugänglichen Kompositpartikeldispersionen auch zur Modifizierung von Zement- und Mörtelformulierungen nutzen. Die nach dem erfindungsgemäßen Verfahren zugänglichen Kompositpartikel lassen sich prinzipiell auch in der medizinischen Diagnostik sowie in anderen medizinischen Anwendungen einsetzen (vgl. z.B. K. Mosbach und L. Andersson, Nature, 1977, 270, Seiten 259 bis 261; P.L. Kronick, Science 1978, 200, Seiten 1074 bis 1076; US-A 4,157,323). Darüber hinaus lassen sich die Kompositpartikel auch als Katalysatoren in verschiedenen wässrigen Dispersionssystemen einsetzen.

Auch sei festgehalten, dass die erfindungsgemäß erhältlichen wässrigen Dispersionen von Kompositpartikeln in einfacher Weise zu redispergierbaren Kompositpartikelpulvern trockenbar sind (z.B. Gefriertrocknung oder Sprühtrocknung). Dies gilt insbesondere dann, wenn die Glasübergangstemperatur der Polymermatrix der erfindungsgemäß zugänglichen Kompositpartikel ≥ 50 °C, vorzugsweise ≥ 60 °C, besonders bevorzugt ≥ 70 °C, ganz besonders bevorzugt ≥ 80 °C und insbesondere bevorzugt ≥ 90 °C bzw. ≥ 100 °C beträgt. Die Kompositpartikelpulver eignen sich u.a. als Additive für Kunststoffe, Komponenten für Tonerformulierungen oder Zusatzstoffe in elektrophotographischen Anwendungen sowie als Komponenten in Zement- und Mörtelformulierungen.

### Beispiele

Für die folgenden Beispiele wurde als feinteiliger anorganischer Feststoff Siliziumdioxid, verwendet. Exemplarisch wurde das kommerziell verfügbare Siliziumdioxidsol Nyacol^{®} 2040 (20 nm) der Firma Akzo-Nobel eingesetzt. Der Siliziumdioxid-Gehalt der wässrigen Feststoffteilchendispersion betrug 40 Gew.-% und der pH-Wert betrug 10. Der in runden Klammern angegebene Wert entspricht dem Durchmesser der anorganischen Feststoffteilchen nach Herstellerangaben.

Die in den Beispielen verwendete Feststoffdispersion erfüllte alle an sie gestellte Forderungen, nämlich, dass sie bei einer Anfangsfeststoffkonzentration von ≥ 1 Gew.-%, bezogen auf die wässrige Dispersion des Feststoffes, noch eine Stunde nach ihrer Herstellung ohne Rühren oder Schütteln mehr als 90 Gew.-% des ursprünglich dispergierten Feststoffes in dispergierter Form enthielt, die dispergierten Feststoffteilchen einen Durchmesser ≤ 100 nm aufwiesen und darüber hinaus die dispergierten anorganischen Feststoffteilchen in einer wässrigen Standardkaliumchlorid-Lösung bei einem pH-Wert, der dem pH-Wert des wässrigen Dispergiermediums vor Beginn der Zugabe der Dispergiermittel entsprach, eine von Null verschiedene elektrophoretische Mobilität zeigten.

### 1. Beispiel

In einem 2 1-Vierhalskolben, ausgerüstet mit einem Rückflußkühler, einem Thermometer, einem mechanischem Rührer sowie einer Dosiervorrichtung, wurden bei 20 bis 25 °C (Raumtemperatur) und 1 bar (absolut) unter Stickstoffatmosphäre und Rühren (200 Umdrehungen pro Minute) 416,6 g Nyacol^{®} 2040 und daran anschließend ein Gemisch aus 2,5 g Methacrylsäure und 12 g einer 10 gew.-%igen wässrigen Lösung von Natriumhydroxid innerhalb von 5 Minuten zugegeben. Danach fügte man der gerührten Reaktionsmischung während 15 Minuten 10,4 g einer 20 gew.-%igen wässrigen Lösung des nichtionischen Tensids Lutensol^{®} AT18 (Marke der BASF AG, C₁₆C₁₈-Fettalkoholethoxilat mit 18 Ethylenoxid-Einheiten) zu. Daran anschließend wurde dem Reaktionsgemisch während 60 Minuten 0,83 g N-Cetyl-N,N,N-trimethylammoniumbromid (CTAB), gelöst in 200 g entionisiertem Wasser, zudosiert. Danach heizte man das Reaktionsgemisch auf eine Reaktionstemperatur von 76 °C auf.

Parallel stellte man als Zulauf 1 eine Monomerenmischung, bestehend aus 123,5 g Methylmethacrylat (MMA), 126 g n-Butylacrylat (n-BA) und 0,5 g Methacryloxypropyltrimethoxysilan (MEMO) sowie als Zulauf 2 eine Initiatorlösung, bestehend aus 3,8 g Natriumperoxodisulfat, 11,5 g einer 10 gew.-%igen Lösung von Natriumhydroxid und 100 g entionisiertem Wasser, her.

Anschließend wurden der bei Reaktionstemperatur gerührten Reaktionsmischung während 5 Minuten über zwei separate Zulaufleitungen 21,1 g von Zulauf 1 und 57,1 g von Zulauf 2 zugegeben. Danach rührte man die Reaktionsmischung eine Stunde bei Reaktionstemperatur. Anschließend fügte man dem Reaktionsgemisch 0,92 g einer 45 gew.-%igen wässrigen Lösung von Dowfax^{®} 2A1 zu und erhöhte die Reaktionstemperatur auf 80 °C. Innerhalb von 2 Stunden wurden nun zeitgleich beginnend die Reste von Zulauf 1 und Zulauf 2 dem Reaktionsgemisch kontinuierlich zudosiert. Danach rührte man die Reaktionsmischung eine weitere Stunde bei Reaktionstemperatur und und kühlte sie anschließend auf Raumtemperatur ab.

Die so erhaltene durchscheinende wässrige Kompositpartikeldispersion wies einen Feststoffgehalt von 40,1 Gew.-%, bezogen auf das Gesamtgewicht der wässrigen Kompositpartikeldispersion, auf.

Der Feststoffgehalt wurde generell bestimmt, indem ca. 1 g der Kompositpartikeldispersion in einem offenen Aluminiumtiegel mit einem Innendurchmesser von ca. 3 cm in einem Trockenschrank bei 150 °C bis zur Gewichtskonstanz getrocknet wurde. Zur Bestimmung des Feststoffgehalts wurden jeweils zwei separate Messungen durchgeführt und der entsprechende Mittelwert gebildet.

Der d₅₀-Teilchendurchmesser wurden mit einer Analytischen Ultrazentrifuge zu 65 nm bestimmt (vgl. hierzu S.E. Harding et al., Analytical Ultracentrifugation in Biochemistry and Polymer Science, Royal Society of Chemistry, Cambridge, Great Britain 1992, Chapter 10, Analysis of Polymer Dispersions with an Eight-Cell-AUC-Multiplexer: High Resolution Particle Size Distribution and Density Gradient Techniques, W. Mächtle, Seiten 147 bis 175). Mittels der Analytischen Zentrifuge konnte auch nachgewiesen werden, dass die erhaltenen Kompositpartikel eine homogene Dichte von 1,33 g/cm³ aufwiesen. Freie Siliziumdioxidteilchen ließen sich nicht nachweisen.

Die Vorzeichenbestimmung der elektrophoretischen Mobilität erfolgte beim verwendeten feinteiligen anorganischen Feststoff mittels des Zetasizer 3000 der Fa. Malvern Instruments Ltd., Großbritannien. Hierzu verdünnte man die feinteilige anorganische Feststoffdispersion mit pH-neutraler 10 mM Kaliumchlorid-Lösung (Standardkaliumchlorid-Lösung) soweit, dass deren Feststoffteilchenkonzentration 60 mg pro Liter lag. Mittels verdünnter Natronlauge stellte man den pH-Wert von 10 ein. Die elektrophoretische Mobilität der Siliziumdioxidteilchen in Nyacol^{®} 2040 wies dabei ein negatives Vorzeichen auf.

### 2. Beispiel

In einem 500 ml-Vierhalskolben, ausgerüstet mit einem Rückflußkühler, einem Thermometer, einem mechanischem Rührer sowie einer Dosiervorrichtung, wurden bei Raumtemperatur und 1 bar (absolut) unter Stickstoffatmosphäre und Rühren (300 Umdrehungen pro Minute) 100 g Nyacol^{®} 2040 und daran anschließend 2,5 g einer 20 gew.-%igen wässrigen Lösung von Lutensol^{®} AT18 zugegeben. Nach 5 Minuten fügte man der gerührten Reaktionsmischung während 30 Minuten 0,2 g CTAB, gelöst in 30 g entionisiertem Wasser, zu. Daran anschließend wurde dem Reaktionsgemisch eine wässrige Lösung, bestehend aus 1,88 g einer 45 gew.-%igen wässrigen Lösung von Dowfax^{®} 2A1 und 11,7 g entionisiertem Wasser, zugegeben.

Parallel stellte man als Zulauf 1 eine Monomerenmischung, bestehend aus 29,95 g MMA, 29,95 g n-BA und 0,10 g MEMO sowie als Zulauf 2 eine Initiatorlösung, bestehend aus 0,9 g Natriumperoxodisulfat, 2 g einer 1-molaren wässrigen Lösung von Natriumhydroxid und 45 g entionisiertem Wasser, her.

Anschließend wurden der bei Raumtemperatur gerührten Reaktionsmischung während 5 Minuten über zwei separate Zulaufleitungen 5 g von Zulauf 1 und 25 g von Zulauf 2 zugegeben. Danach erhitzte man die Reaktionsmischung auf 76 °C und rührte sie eine Stunde bei dieser Temperatur. Dem Reaktionsgemisch wurden nun innerhalb von 2 Stunden zeitgleich beginnend die Reste von Zulauf 1 und Zulauf 2 kontinuierlich zudosiert. Danach rührte man die Reaktionsmischung eine weitere Stunde bei Reaktionstemperatur und und kühlte sie anschließend auf Raumtemperatur ab.

Die so erhaltene durchscheinende wässrige Kompositpartikeldispersion wies einen Feststoffgehalt von 39,8 Gew.-%, bezogen auf das Gesamtgewicht der wässrigen Kompositpartikeldispersion, auf.

Der mittels einer Analytischen Ultrazentrifuge erhaltene d₅₀-Teilchendurchmesser betrug 100 nm. Freie Siliziumdioxidteilchen ließen sich nicht nachweisen.

### 1. Vergleichsbeispiel

Beispiel 2 wurde wiederholt mit der Ausnahme, dass kein Dowfax^{®} 2A1 eingesetzt wurden.

Infolge von Koagulation während der Polymerisationsreaktion konnte keine stabile wässrige Kompositpartikeldispersion erhalten werden.

### 2. Vergleichsbeispiel

Beispiel 2 wurde wiederholt mit der Ausnahme, dass keine Vorpolymerisation erfolgte und man die Gesamtmenge an Zulauf 1 und Zulauf 2 der Reaktionsmischung während 2 Stunden zudosierte.

Die gebildete milchig trübe Partikeldispersion wies einen Feststoffgehalt von 39,8 Gew.-%, bezogen auf das Gesamtgewicht der wässrigen Partikeldispersion, auf. Die erhaltene Partikeldispersion war jedoch nicht stabil und gelierte innerhalb von 12 Stunden.

### 3. Beispiel

In einem 500 ml-Vierhalskolben, ausgerüstet mit einem Rückflußkühler, einem Thermometer, einem mechanischem Rührer sowie einer Dosiervorrichtung, wurden bei Raumtemperatur und 1 bar (absolut) unter Stickstoffatmosphäre und Rühren (300 Umdrehungen pro Minute) 100 g Nyacol^{®} 2040 und daran anschließend 2,5 g einer 20 gew.-%igen wässrigen Lösung von Lutensol^{®} AT18 zugegeben. Nach 5 Minuten fügte man der gerührten Reaktionsmischung zuerst eine wässrige Lösung, bestehend aus 0,6 g Methacrylsäure, 7 g einer 1-molaren wässrigen Lösung von Natriumhydroxid und 5 g entionisiertem Wasser und daran anschließend während 30 Minuten, 0,2 g CTAB, gelöst in 30 g entionisiertem Wasser, zu.

Parallel stellte man als Zulauf 1 eine Monomerenmischung, bestehend aus 30 g MMA und 30 g n-BA sowie als Zulauf 2 eine Initiatorlösung, bestehend aus 0,9 g Natriumperoxodisulfat, 2 g einer 1-molaren Lösung von Natriumhydroxid und 45 g entionisiertem Wasser, her.

Anschließend wurden der bei Raumtemperatur gerührten Reaktionsmischung während 5 Minuten über zwei separate Zulaufleitungen 5 g von Zulauf 1 und 25 g von Zulauf 2 zugegeben. Danach erhitzte man die Reaktionsmischung auf 76 °C und rührte sie eine Stunde bei dieser Temperatur. Dem Reaktionsgemisch wurden nun innerhalb von 2 Stunden zeitgleich beginnend die Reste von Zulauf 1 und Zulauf 2 kontinuierlich zudosiert. Danach rührte man die Reaktionsmischung eine weitere Stunde bei Reaktionstemperatur und und kühlte sie anschließend auf Raumtemperatur ab.

Die so erhaltene durchscheinende wässrige Kompositpartikeldispersion wies einen Feststoffgehalt von 39,7 Gew.-%, bezogen auf das Gesamtgewicht der wässrigen Kompositpartikeldispersion, auf.

Der mittels einer Analytischen Ultrazentrifuge erhaltene d₅₀-Teilchendurchmesser betrug 77 nm. Freie Siliziumdioxidteilchen ließen sich nicht nachweisen.

## Patentansprüche

1. Verfahren zur Herstellung einer wässrigen Dispersion von aus Polymerisat und feinteiligem anorganischem Feststoff aufgebauten Partikeln (Kompositpartikel), bei dem wenigstens ein ethylenisch ungesättigtes Monomer in wässrigem Medium dispers verteilt und mittels wenigstens eines radikalischen Polymerisationsinitiators im Beisein wenigstens eines dispers verteilten, feinteiligen anorganischen Feststoffes und wenigstens eines anionischen, kationischen und nichtionischen Dispergiermittels nach der Methode der radikalisch wässrigen Emulsionspolymerisation polymerisiert wird, wobei
a) eine stabile wässrige Dispersion des wenigstens einen anorganischen Feststoffs eingesetzt wird, welche **dadurch** charakterisiert ist, dass sie bei einer Anfangsfeststoffkonzentration von ≥ 1 Gew.-%, bezogen auf die wässrige Dispersion des wenigstens einen anorganischen Feststoffs, noch eine Stunde nach ihrer Herstellung mehr als 90 Gew.-% des ursprünglich dispergierten Feststoffes in dispergierter Form enthält und deren dispergierte Feststoffteilchen einen Durchmesser ≤ 100 nm aufweisen,
b) die dispergierten Feststoffteilchen des wenigstens einen anorganischen Feststoffs in einer wässrigen Standardkaliumchlorid-Lösung bei einem pH-Wert, der dem pH-Wert des wässrigen Reaktionsmediums vor Beginn der Zugabe der Dispergiermittel entspricht, eine von Null verschiedene elektrophoretische Mobilität zeigen,
c) die wässrige Feststoffteilchendispersion vor Beginn der Zugabe des wenigstens einen ethylenisch ungesättigten Monomeren mit wenigstens einem anionischen, kationischen und nichtionischen Dispergiermittel versetzt wird,
d) danach 0,01 bis 30 Gew.-% der Gesamtmenge des wenigstens einen Monomeren der wässrigen Feststoffteilchendispersion zugesetzt und bis zu einem Umsatz von wenigstens 90 % polymerisiert wird
und
e) daran anschließend die Restmenge des wenigstens einen Monomeren unter Polymerisationsbedingungen nach Maßgabe des Verbrauchs zugegeben wird.

2. Verfahren nach Anspruch 1, **dadurch gekennzeichnet, dass**, bezogen auf 100 Gew.-Teile des wenigstens einen ethylenisch ungesättigten Monomeren, 1 bis 1000 Gew.-Teile des wenigstens einen feinteiligen anorganischen Feststoffs eingesetzt werden und, dass dann, wenn die dispergierten Feststoffteilchen
a) eine elektrophoretische Mobilität mit negativem Vorzeichen aufweisen, 0,01 bis 10 Gew.-Teile wenigstens eines kationischen Dispergiermittels, 0,01 bis 100 Gew.-Teile wenigstens eines nichtionischen Dispergiermittels und wenigstens ein anionisches Dispergiermittel eingesetzt werden, wobei dessen Menge so bemessen wird, dass das äquivalente Verhältnis von anionischem zu kationischem Dispergiermittel größer 1 ist, oder
b) eine elektrophoretische Mobilität mit positivem Vorzeichen aufweisen, 0,01 bis 10 Gew.-Teile wenigstens eines anionischen Dispergiermittels, 0,01 bis 100 Gew.-Teile wenigstens eines nichtionischen Dispergiermittels und wenigstens ein kationisches Dispergiermittel eingesetzt werden, wobei dessen Menge so bemessen wird, dass das äquivalente Verhältnis von kationischem zu anionischem Dispergiermittel größer 1 ist.

3. Verfahren nach Anspruch 2, **dadurch gekennzeichnet, dass**
a) im Falle des Vorliegens von dispergierten Feststoffteilchen mit einer elektrophoretischen Mobilität mit negativem Vorzeichen, eine Teil- oder die Gesamtmenge des wenigstens einen anionischen Dispergiermittels durch die äquvalente Menge wenigstens eines Monomeren A ersetzt ist, welches wenigstens eine Säuregruppe und/oder deren entsprechendes Anion enthält, und
b) im Falle des Vorliegens von dispergierten Feststoffteilchen mit einer elektrophoretischen Mobilität mit positivem Vorzeichen, eine Teil- oder die Gesamtmenge des wenigstens einen kationischen Dispergiermittels durch die äquvalente Menge wenigstens eines Monomeren B ersetzt ist, welches wenigstens eine Amino-, Amido-, Ureido- oder N-heterocyclische Gruppe und/oder deren am Stickstoff protonierten oder alkylierten Ammoniumderivate enthält.

4. Verfahren nach einem der Ansprüche 1 bis 3, **dadurch gekennzeichnet, dass** das wenigstens eine nichtionische Dispergiermittel vor dem wenigstens einen kationischen und anionischen Dispergiermittel zugegeben wird.

5. Verfahren nach einem der Ansprüche 1 bis 4, **dadurch gekennzeichnet, dass** der wenigstens eine anorganische Feststoff ausgewählt ist aus der Gruppe umfassend Siliziumdioxid, Aluminiumoxid, Hydroxyaluminiumoxid, Calciumcarbonat, Magnesiumcarbonat, Calciumorthophosphat, Magnesiumorthophosphat, Eisen-(II)-oxid, Eisen-(III)-oxid, Eisen-(II/III)-oxid, Zinn-(IV)-oxid, Cer-(IV)-oxid, Yttrium-(III)-oxid, Titandioxid, Hydroxylapatit, Zinkoxid und Zinksulfid.

6. Verfahren nach einem der Ansprüche 1 bis 5, **dadurch gekennzeichnet, dass** der wenigstens eine anorganische Feststoff ein Siliziumdioxid-Sol ist, welches eine elektrophoretische Mobilität mit negativem Vorzeichen aufweist.

7. Wässrige Dispersion von Kompositpartikeln, erhältlich nach einem Verfahren gemäß einem der Ansprüche 1 bis 6.

8. Verwendung einer wässrigen Dispersion von Kompositpartikeln gemäß Anspruch 7, als Bindemittel, zur Herstellung einer Schutzschicht, als Klebstoff, zur Modifizierung von Zement- und Mörtelformulierungen oder in der medizinischen Diagnostik.

9. Kompositpartikelpulver, erhältlich durch Trocknung einer wässrigen Dispersion von Kompositpartikeln gemäß Anspruch 7.

## Claims

1. A process for preparing an aqueous dispersion of particles composed of addition polymer and finely divided inorganic solid (composite particles), in which process at least one ethylenically unsaturated monomer is dispersely distributed in aqueous medium and is polymerized by the method of free-radical aqueous emulsion polymerization by means of at least one free-radical polymerization initiator in the presence of at least one dispersely distributed, finely divided inorganic solid and at least one anionic, cationic and nonionic dispersant, wherein
a) a stable aqueous dispersion of said at least one inorganic solid is used, said dispersion having the characteristic features that at an initial solids concentration of ≥ 1% by weight, based on the aqueous dispersion of said at least one inorganic solid, it still contains in dispersed form one hour after its preparation more than 90% by weight of the originally dispersed solid and its dispersed solid particles have a diameter ≤ 100 nm,
b) the dispersed particles of said at least one inorganic solid exhibit a nonzero electrophoretic mobility in an aqueous standard potassium chloride solution at a pH which corresponds to the pH of the aqueous reaction medium before the beginning of dispersant addition,
c) at least one anionic, cationic or nonionic dispersant is added to the aqueous solid-particle dispersion before the beginning of the addition of said at least one ethylenically unsaturated monomer,
d) then from 0.01 to 30% by weight of the total amount of said at least one monomer are added to the aqueous solid-particle dispersion and polymerized to a conversion of at least 90%,
and
e) thereafter the remainder of said at least one monomer is added under polymerization conditions at the rate at which it is consumed.

2. The process according to claim 1, wherein from 1 to 1000 parts by weight of said at least one finely divided inorganic solid are used per 100 parts by weight of said at least one ethylenically unsaturated monomer and wherein
a) when the dispersed solid particles have an electrophoretic mobility having a negative sign, from 0.01 to 10 parts by weight of at least one cationic dispersant, from 0.01 to 100 parts by weight of at least one nonionic dispersant, and at least one anionic dispersant are used, the amount thereof being such that the equivalent ratio of anionic to cationic dispersant is more than 1, or
b) when the dispersed solid particles have an electrophoretic mobility having a positive sign, from 0.01 to 10 parts by weight of at least one anionic dispersant, from 0.01 to 100 parts by weight of at least one nonionic dispersant, and at least one cationic dispersant are used, the amount thereof being such that the equivalent ratio of cationic to anionic dispersant is more than 1.

3. The process according to claim 2, wherein
a) in the presence of dispersed solid particles having an electrophoretic mobility having a negative sign, some or all of said at least one anionic dispersant is replaced by the equivalent amount of at least one monomer A containing at least one acid group and/or its corresponding anion, and
b) in the presence of dispersed solid particles having an electrophoretic mobility having a positive sign, some or all of said at least one cationic dispersant is replaced by the equivalent amount of at least one monomer B containing at least one amino, amido, ureido or N-heterocyclic group and/or the N-protonated or N-alkylated ammonium derivatives thereof.

4. The process according to any of claims 1 to 3, wherein said at least one nonionic dispersant is added before said at least one cationic and anionic dispersant.

5. The process according to any of claims 1 to 4, wherein said at least one inorganic solid is selected from the group consisting of silicon dioxide, aluminum oxide, hydroxyaluminum oxide, calcium carbonate, magnesium carbonate, calcium orthophosphate, magnesium orthophosphate, iron(II) oxide, iron(III) oxide, iron(II/III) oxide, tin(IV) oxide, cerium(IV) oxide, yttrium(III) oxide, titanium dioxide, hydroxyapatite, zinc oxide, and zinc sulfide.

6. The process according to any of claims 1 to 5, wherein said at least one inorganic solid is a silicon dioxide sol which has an electrophoretic mobility having a negative sign.

7. An aqueous dispersion of composite particles obtainable by a process according to any of claims 1 to 6.

8. The use of an aqueous dispersion of composite particles, according to claim 7, as a binder, for producing a protective coat, as an adhesive for modifying cement formulations and mortar formulations, or in medical diagnostics.

9. A composite-particle powder obtainable by drying an aqueous dispersion of composite particles, according to claim 7.

## Revendications

1. Procédé de préparation d'une dispersion aqueuse de particules (particules composites) constituées d'un polymère et d'une substance solide inorganique finement divisée, dans lequel au moins un monomère éthyléniquement insaturé est réparti de manière dispersée dans un milieu aqueux et est polymérisé selon la méthode de polymérisation en émulsion aqueuse par voie radicalaire au moyen d'au moins un amorceur de polymérisation radicalaire en présence d'au moins une substance solide inorganique finement divisée, répartie de manière dispersée, et d'au moins un agent dispersant anionique, cationique et non ionique, procédé dans lequel
a) une dispersion aqueuse stable de ladite au moins une substance solide inorganique est mise en oeuvre, laquelle est **caractérisée par le fait qu'**elle contient, pour une concentration de substance solide de départ ≥ 1 % en poids, par rapport à la dispersion aqueuse de ladite au moins une substance solide inorganique, plus de 90 % en poids de la substance solide initialement dispersée sous une forme dispersée, encore une heure après sa préparation, ses particules dispersées de substance solide présentant un diamètre ≤ 100 nm,
b) les particules dispersées de substance solide de ladite au moins une substance solide inorganique montrent, dans une solution aqueuse de chlorure de potassium standard à une valeur de pH qui correspond à la valeur de pH du milieu réactionnel aqueux avant le début de l'addition, de l'agent dispersant, une mobilité électrophorétique différente de zéro,
c) la dispersion aqueuse de particules de substance solide est, avant le début de l'addition dudit au moins un monomère éthyléniquement insaturé, additionnée d'au moins un agent dispersant anionique, cationique et non ionique,
d) 0,01 à 30 % en poids de la quantité totale dudit au moins un monomère sont ensuite ajoutés à la dispersion aqueuse de particules de substance solide et polymérisés jusqu'à un degré de conversion d'au moins 90 %,
et
e) la quantité résiduaire dudit au moins un monomère est ensuite ajoutée dans des conditions de polymérisation selon la mesure de la consommation.

2. Procédé suivant la revendication 1, **caractérisé en ce que**, par rapport à 100 parties en poids dudit au moins un monomère éthyléniquement insaturé, on met en oeuvre 1 à 1000 parties en poids de ladite au moins une substance solide inorganique finement divisée et **en ce qu'**ensuite, on met en oeuvre, lorsque les particules de substance solide dispersées
a) présentent une mobilité électrophorétique à signe négatif, 0,01 à 10 parties en poids d'au moins un agent dispersant cationique, 0,01 à 100 parties en poids d'au moins un agent dispersant non ionique et au moins un agent dispersant anionique, dont la quantité est mesurée de façon à ce que le rapport équivalent entre agent dispersant anionique et agent dispersant cationique soit plus grand que 1, ou
b) lorsqu'elles présentent une mobilité électrophorétique à signe positif, 0,01 à 10 parties en poids d'au moins un agent dispersant anionique, 0,01 à 100 parties en poids d'au moins un agent dispersant non ionique et au moins un agent dispersant cationique, dont la quantité est mesurée de façon à ce que le rapport équivalent entre agent dispersant cationique et agent dispersant anionique soit plus grand que 1.

3. Procédé suivant la revendication 2, **caractérisé en ce que**
a) dans le cas de la présence de particules dispersées de substance solide ayant une mobilité électrophorétique à signe négatif, une quantité partielle ou la quantité totale dudit au moins un agent dispersant anionique est remplacée par la quantité équivalente d'au moins un monomère A, qui contient au moins un groupe acide et/ou son anion correspondant, et
b) dans le cas de la présence de particules dispersées de substance solide ayant une mobilité électrophorétique à signe positif, une quantité partielle ou la quantité totale dudit au moins un agent dispersant cationique est remplacée par la quantité équivalente d'au moins un monomère B, qui contient au moins un groupe amino, amido, uréido ou N-hétérocyclique et/ou leurs dérivés d'ammonium alkylés ou protonés sur l'azote.

4. Procédé suivant l'une des revendications 1 à 3, **caractérisé en ce que** ledit au moins un agent dispersant non ionique est ajouté avant ledit au moins un agent dispersant cationique et anionique.

5. Procédé suivant l'une des revendications 1 à 4, **caractérisé en ce que** ladite au moins une substance solide inorganique est choisie parmi le groupe comprenant du dioxyde de silicium, de l'oxyde d'aluminium, de l'oxyde d'hydroxyaluminium, du carbonate de calcium, du carbonate de magnésium, de l'orthophosphate de calcium, de l'orthophosphate de magnésium, de l'oxyde de fer (II), de l'oxyde de fer (III), de l'oxyde de fer (II/III), de l'oxyde d'étain (IV), de l'oxyde de cérium (IV), de l'oxyde d'yttrium (III), du dioxyde de titane, de l'hydroxyapatite, de l'oxyde de zinc et du sulfure de zinc.

6. Procédé suivant l'une des revendications 1 à 5, **caractérisé en ce que** ladite au moins une substance solide inorganique est un sol de dioxyde de silicium qui présente une mobilité électrophorétique à signe négatif.

7. Dispersion aqueuse de particules composites, que l'on peut obtenir selon un procédé suivant l'une des revendications 1 à 6.

8. Utilisation d'une dispersion aqueuse de particules composites suivant la revendication 7, comme liant, pour la préparation d'une couche de protection, comme colle, pour la modification de formulations de ciment et de mortier ou dans le diagnostic médical.

9. Poudre de particules composites, que l'on peut obtenir par séchage d'une dispersion aqueuse de particules composites suivant la revendication 7.
